(19)

**Europäisches Patentamt**
**European Patent Office**
**Office européen des brevets**

(11)  **EP 4 592 441 A1**

(12)  # EUROPEAN PATENT APPLICATION
published in accordance with Art. 153(4) EPC

(43) Date of publication:
**30.07.2025  Bulletin 2025/31**

(21) Application number: **23885780.9**

(22) Date of filing: **31.10.2023**

(51) International Patent Classification (IPC):
**D04H 5/03** (2012.01)      **A45D 44/22** (2006.01)
**D04H 3/16** (2006.01)

(52) Cooperative Patent Classification (CPC):
**A45D 44/22; D04H 3/16; D04H 5/03**

(86) International application number:
**PCT/JP2023/039339**

(87) International publication number:
**WO 2024/096026 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022  JP 2022174978**

(71) Applicants:
• **Mitsui Chemicals Asahi Life Materials Co., Ltd.**
  **Tokyo 104-0028 (JP)**
• **Unitika Ltd.**
  **Osaka-shi**
  **Osaka 541-8566 (JP)**

(72) Inventors:
• **TAKAKU, Shouichi**
  **Tokyo 104-0028 (JP)**
• **SASAKI, Kaori**
  **Tokyo 104-0028 (JP)**
• **ICHIKAWA, Taro**
  **Tokyo 104-0028 (JP)**
• **FUSHIMI, Mayu**
  **Tokyo 104-0028 (JP)**
• **MATSUNAGA, Atsushi**
  **Okazaki-shi, Aichi 444-8511 (JP)**
• **MORI, Shotaro**
  **Okazaki-shi, Aichi 444-8511 (JP)**

(74) Representative: **Hoffmann Eitle**
**Patent- und Rechtsanwälte PartmbB**
**Arabellastraße 30**
**81925 München (DE)**

(54)  **HYDROENTANGLED NONWOVEN FABRIC, FACE MASK, AND METHOD FOR PRODUCING HYDROENTANGLED NONWOVEN FABRIC**

(57)    The hydroentangled nonwoven fabric of the disclosure includes a spunbonded nonwoven fabric, and a fiber web bonded to at least one main surface of the spunbonded nonwoven fabric by hydroentangling. The fiber web is composed of natural fibers or regenerated cellulose fibers. The hydroentangled nonwoven fabric of the disclosure satisfies the following (a) or (b): (a) the spunbonded nonwoven fabric has plural embossed parts in which some of the plural fibers contained in the spunbonded nonwoven fabric are fused, and the plural embossed parts are arranged in an irregular pattern; or (b) the spunbonded nonwoven fabric does not have the embossed parts.

**EP 4 592 441 A1**

**Description**

Technical Field

The present invention relates to: a hydroentangled nonwoven fabric; a face mask; and a method of producing a hydroentangled nonwoven fabric.

Background Art

In the field of beauty, liquid-impregnated sheets (e.g., covering sheets such as face masks) that are impregnated with a liquid containing active ingredients (e.g., lotion) are used. Nonwoven fabrics are used as substrates of such liquid-impregnated sheets.

Patent Document 1 discloses a laminated nonwoven fabric suitable as a substrate of a liquid-impregnated sheet. The laminated nonwoven fabric disclosed in Patent Document 1 includes a spunbonded nonwoven fabric, and a surface layer arranged on both surfaces of the spunbonded nonwoven fabric. The spunbonded nonwoven fabric and the surface layer are integrated by entanglement of fibers. Bonded parts in which the fibers are bonded with each other have a specific relationship. In the laminated nonwoven fabric specifically disclosed in Patent Document 1, the material of the spunbonded nonwoven fabric is a polyethylene terephthalate or a polypropylene, and the fibers of the surface layer are composed of solvent-spun cellulose fibers (fiber length: 38 mm), or viscose rayon (fiber length: 40 mm) and dispersed composite fibers (fiber length: 51 mm).

Patent Document 1: Japanese Patent Application Laid-Open (JP-A) No. 2018-176522

SUMMARY OF THE INVENTION

Technical Problem

With growing interest in beauty in recent years, the product development satisfying the demands of users is important. For instance, there is a demand for a face mask that more easily and tightly adheres to the skin (e.g., nasal area) when worn on the face in a liquid-impregnated state (hereinafter, also referred to as "wet state"). In other words, there is a demand for a face mask having excellent conformability to the skin in a wet state.

In view of the above-described problem, an object of one aspect of the invention is to provide: a hydroentangled nonwoven fabric that can be made into a face mask having excellent conformability to the skin in a wet state; and a method of producing the same.

An object of another aspect of the invention is to provide a face mask having excellent conformability to the skin in a wet state.

Solution to Problem

Concrete means for solving the above-described problem encompass the following aspects.

<1> A hydroentangled nonwoven fabric, including:

a spunbonded nonwoven fabric containing heat-fused fibers; and
a fiber web bonded to at least one main surface of the spunbonded nonwoven fabric by hydroentangling, wherein:

the fiber web is composed of natural fibers or regenerated cellulose fibers, and
the hydroentangled nonwoven fabric satisfies the following (a) or (b):

(a) the spunbonded nonwoven fabric has plural embossed parts in which some of the plural fibers contained in the spunbonded nonwoven fabric are fused, and the plural embossed parts are arranged in an irregular pattern; or
(b) the spunbonded nonwoven fabric does not have the embossed parts.

<2> The hydroentangled nonwoven fabric according to <1>, wherein:

the spunbonded nonwoven fabric has a basis weight of from 15 g/m$^2$ to 40 g/m$^2$, and
a ratio of the basis weight of the spunbonded nonwoven fabric with respect to a basis weight of the fiber web is from 0.35 to 1.60.

<3> The hydroentangled nonwoven fabric according to <1> or <2>, wherein the fiber web is composed of rayon fibers.

<4> The hydroentangled nonwoven fabric according to any one of <1> to <3>, wherein the plural fibers include extensible long fibers.

<5> The hydroentangled nonwoven fabric according to <4>, wherein the extensible long fibers include olefin resin long fibers.

<6> The hydroentangled nonwoven fabric according to any one of <1> to <5>, wherein the plural fibers include stretchable long fibers.

<7> The hydroentangled nonwoven fabric according to <6>, wherein the stretchable long fibers include thermoplastic polyurethane-based elastomer long fibers.

<8> The hydroentangled nonwoven fabric according to any one of <1> to <7>, wherein:

the fiber web is bonded to both main surfaces of the spunbonded nonwoven fabric by hydroentangling, and
the fiber web is composed of the regenerated cellulose fibers.

<9> A face mask, including the hydroentangled nonwoven fabric according to any one of <1> to <8>.

<10> A method of producing a hydroentangled nonwoven fabric, the method including:

preparing a spunbond web;
performing an embossing treatment on the spunbond web to prepare a spunbonded nonwoven fabric precursor that contains heat-fused fibers and has plural embossed parts;
preparing a fiber web precursor composed of natural fibers or regenerated cellulose fibers;
placing the fiber web precursor on at least one main surface of the spunbonded nonwoven fabric precursor to form a laminated body; and
producing a hydroentangled nonwoven fabric from the laminated body by hydroentangling.

<11> The method of producing a hydroentangled nonwoven fabric according to <10>, wherein:

the method further includes gear stretching the spunbonded nonwoven fabric precursor, and
the gear stretching is performed before the formation of the laminated body.

<12> The method of producing a hydroentangled nonwoven fabric according to <10> or <11>, wherein a high-pressure water jet used in the hydroentangling has a water pressure of from 0.1 MPa to 30 MPa.

Advantageous Effects of Invention

According to one aspect of the invention, a hydroentangled nonwoven fabric that can be made into a face mask having excellent conformability to the skin in a wet state, and a method of producing the same are provided.

According to another aspect of the invention, a face mask having excellent conformability to the skin in a wet state is provided.

BRIEF DESCRIPTION OF DRAWINGS

[FIG. 1] FIG. 1 is a surface view of a nonwoven fabric, illustrating one example of embossed pattern.
[FIG. 2] FIG. 2 is a schematic drawing of a gear stretching device.
[FIG. 3] FIG. 3 is a drawing for describing a method of measuring the bending resistance in a wet state.

DESCRIPTION OF EMBODIMENTS

Embodiments of the present disclosure will now be described. The following descriptions and Examples exemplify the embodiments, and do not limit the scope of the embodiments.

In a set of numerical ranges that are stated in a stepwise manner in the disclosure, the upper limit value or the lower limit value of one numerical range may be replaced with the upper limit value or the lower limit value of other numerical range. Further, in a numerical range stated in the disclosure, the upper limit value or the lower limit value of the numerical range may be replaced with a relevant value indicated in any of Examples.

In the disclosure, each component may contain plural substances that correspond to the component. In the disclosure, where the amount of a component in a composition is mentioned and there are plural substances that correspond to the component of the composition, the indicated amount of the component in the composition means, unless otherwise specified, a total amount of the plural substances existing in the composition.

In the disclosure, the term "step" encompasses not only a discrete step but also a step that cannot be clearly distinguished from other steps, as long as the intended purpose of the step is achieved. In the disclosure, those numerical ranges that are expressed with "to" each denote a range that includes the numerical values stated before and after "to" as the lower limit value and the upper limit value, respectively. In the disclosure, where the amount of a component in a composition is mentioned and there are plural substances that correspond to the component of the composition, the indicated amount of the component in the composition means, unless otherwise specified, a total amount of the plural substances existing in the composition.

[1] Hydroentangled Nonwoven Fabric

The hydroentangled nonwoven fabric of the disclosure includes: a spunbonded nonwoven fabric containing heat-fused fibers; and a fiber web bonded to at least one main surface of the spunbonded nonwoven fabric by hydroentangling. The fiber web is composed of natural fibers or regenerated cellulose fibers. The hydroentangled nonwoven fabric of the disclosure satisfies the following (a) or (b):

(a) the spunbonded nonwoven fabric has plural embossed parts in which some of the plural fibers contained in the spunbonded nonwoven fabric are fused, and the plural embossed parts are arranged in an irregular pattern; or
(b) the spunbonded nonwoven fabric does not have the embossed parts.

The term " heat-fused fibers" used herein refers to fibers that are fused to other fibers. The term "spunbonded nonwoven fabric" used herein refers to a nonwoven fabric produced by a bonding method that includes thermal bonding applied to a spunlaid web (e.g., embossing treatment). The term "spunlaid web" used herein refers to a web that is produced by extruding a molten or dissolved polymer from a nozzle and disposing thus extruded long fibers (filaments) in layers on a moving screen. Hereinafter, a "spunlaid web" is also referred to as a "spunbond web". The term "web" used herein refers to a sheet consisting of only fibers. The term "nonwoven fabric" used herein refers to a planar fiber aggregate in which a prescribed level of structural strength is achieved by a physical method and/or a chemical method, excluding weaving, knitting, and papermaking. The term "hydroentangling" used herein refers to a method of bonding a web and/or a nonwoven fabric by entanglement of short or long fibers using a high-pressure water jet. The term "embossed part" used herein refers to a non-fibrous portion in which some of the plural fibers are thermally bonded. Specifically, an embossed part refers to a portion in which bonded area is 0.1 $mm^2$ or larger. The presence or absence of an embossed part is judged by observing the surface or a cross-section of a fiber aggregate and determining whether or not an embossed part (a portion in which bonded area is 0.1 $mm^2$ or larger) is present. It is noted here that, in the disclosure, even if a film-like part is formed in a portion of the embossed part as a non-fibrous portion by embossing a spunlaid web, the shape of the film-like part is less than about 1 mm in diameter. The term "hydroentangled nonwoven fabric" used herein refers to a nonwoven fabric produced by hydroentangling. The feature "(b) the spunbonded nonwoven fabric does not have the embossed parts" indicates that the spunbonded nonwoven fabric does not have an embossed part on its surface.

Hereinafter, in the planar direction of a movable screen on which long fibers are to be disposed in layers, a direction parallel to the moving direction of the screen is also referred to as "machine direction (MD)". In the planar direction of a movable screen on which long fibers are to be disposed in layers, a direction perpendicular to the moving direction of the screen is also referred to as "cross direction (CD)".

The machine direction (MD) of the spunbonded nonwoven fabric can be determined from the spunbonded nonwoven fabric itself by measuring its tensile strength.

Generally, in the production of a spunbonded nonwoven fabric, the moving speed of a screen is set rather fast from the standpoint of productivity. Thus, long fibers contained in a web are likely to be oriented in a direction parallel to the machine direction (MD) at the time of being disposed on the screen. Consequently, the resulting spunbonded nonwoven fabric has a higher tensile strength in the machine direction (MD) than in the cross direction (CD). Therefore, the machine direction (MD) of the spunbonded nonwoven fabric can be determined from the spunbonded nonwoven fabric itself by measuring its tensile strength.

The feature "plural embossed parts are arranged in an irregular pattern" indicates that the pattern of the embossed parts does not have a regularity. Specifically, the feature "plural embossed parts are arranged in an irregular pattern" indicates that the plural embossed parts arranged in a regular pattern have been broken up by hydroentangling.

The feature "plural embossed parts arranged in a regular pattern" satisfies the following conditions (X1) and (X3), or the following conditions (X2) and (X3).

Condition (X1): a nonwoven fabric in which adjacent embossed parts are arranged at equal intervals in each of the machine direction (MD) and the cross direction (CD)

Condition (X2): a nonwoven fabric in which plural kinds of embossed pattern groups are repeated at equal intervals in each of the machine direction (MD) and the cross direction (CD)

Condition (X3): a nonwoven fabric in which embossed parts of the same shape are arrayed

The feature "plural embossed parts arranged in a regular pattern" encompasses those cases in which the shape of the embossed parts imparted to the hydroentangled nonwoven fabric is different from the shape of the protruding parts of an embossing roll used for the formation of the embossed parts, and the difference between the embossed area ratio of the hydroentangled nonwoven fabric and the area ratio of the protruding parts of the embossing roll is greater than ±10%.

In the condition (X1), examples of the shape of the embossed parts include a circular shape, an elliptical shape, an oval shape, a square shape, a rhombic shape, a rectangular shape, a quadrangular shape, and a continuous shape based on the aforementioned shapes. In the condition (X1), the area ratio of the embossed parts is preferably from 5% to 50%. The "area ratio of the embossed parts" refers to a proportion of a total area of plural embossed parts with respect to an observed area of the spunbonded nonwoven fabric, which is determined by collecting a test piece of 10 mm × 10 mm from the spunbonded nonwoven fabric and observing the contact surface of the test piece with an embossing roll under an electron microscope (magnification: × 100).

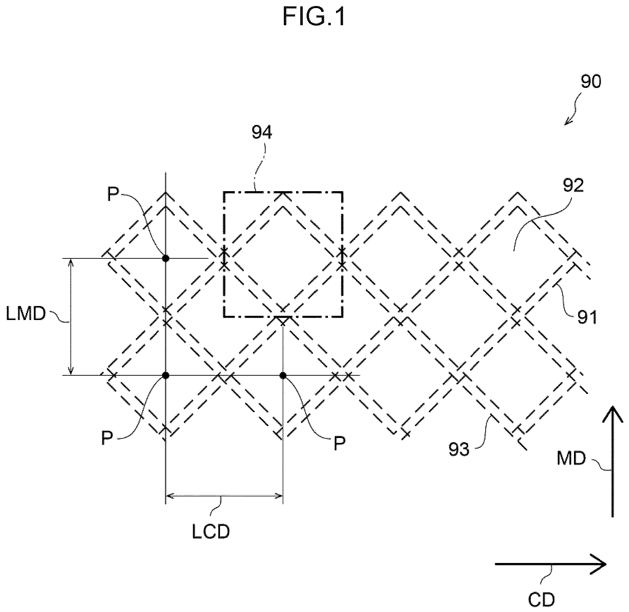

In the condition (X2), the "embossed pattern groups" refers to unit patterns divided by embossed parts. Examples of the embossed pattern include a quilt pattern, a herringbone pattern, and a bar pattern. FIG. 1 illustrates one example of embossed pattern. In FIG. 1, a symbol 90 represents a nonwoven fabric, a symbol 91 represents an embossed part, a symbol 92 represents a non-embossed part, a symbol 93 represents an embossed line, and a symbol 94 represents a quilt pattern (i.e. an embossed pattern). The "embossed line" indicates that plural embossed parts are arranged in a line.

In the condition (X3), the feature "embossed parts of the same shape are arrayed" indicates that the following condition (X31) or the following condition (X32) is satisfied. Specifically, the feature "embossed parts of the same shape are arrayed" indicates that the following condition (X33) is satisfied.

Condition (X31): The plural embossed parts are each arranged in the same shape.

Condition (X32): The embossed parts forming an embossed pattern group are arranged in the same shape.

Condition (X33): When repeating patterns of the embossed parts are extracted from 20 spots and the areas of these 20 repeating patterns are compared, at least 10 of these repeating patterns have an area difference, which is represented by the following Formula (X330), of ±10% or less.

$$\text{Area difference} = [(\text{Measured value} - \text{Average value}) \div \text{Average value}] \times 100 \qquad \text{Formula (X330):}$$

The hydroentangled nonwoven fabric of the disclosure has the above-described configuration; therefore, it can be made into a face mask having excellent conformability to the skin in a wet state.

This effect is presumably attributed to, but not limited to, the following reason.

Generally, some of plural fibers contained in a spunbonded nonwoven fabric are thermally bonded by an embossing treatment. In other words, a general spunbonded nonwoven fabric has plural embossed parts that are arranged in a regular pattern. When the pattern of the plural embossed parts is regularly arranged, the elastic force of the spunbonded nonwoven fabric is relatively high. In other words, the spunbonded nonwoven fabric has a firmness (i.e. the spunbonded nonwoven fabric has both mechanical strength and elasticity). The present inventors found that, when a face mask using a firm spunbonded nonwoven fabric is worn on the face in a wet state, the spunbonded nonwoven fabric does not easily conform to the skin in some cases.

In the disclosure, the spunbonded nonwoven fabric does not have an embossed part on its surface. Or, even if the spunbonded nonwoven fabric has plural embossed parts on its surface, the plural embossed parts are arranged in an irregular pattern. As a result, the elastic force of the spunbonded nonwoven fabric of the disclosure is lower than that of a spunbonded nonwoven fabric in which plural embossed parts can be confirmed to be arranged in a regular pattern. A face mask using the spunbonded nonwoven fabric of the disclosure, when worn on the face in a wet state, exhibits a moderate firmness and excellent impregnation properties of the spunbonded nonwoven fabric. Therefore, the face mask of the disclosure can give the wearer a feeling that the face mask tightly fits to the skin. In addition, the face mask of the disclosure tends to maintain a feeling of tightly fitting to the skin in a wet state. In the disclosure, the property that the face mask gives the wearer a feeling of tightly fitting to the skin is referred to as "easily conforming to the skin". In other words, since the hydroentangled nonwoven fabric of the disclosure has the above-described configuration, it is presumed that the hydroentangled nonwoven fabric can be made into a face mask having excellent conformability to the skin in a wet state.

Examples of a method of adjusting the hydroentangled nonwoven fabric to satisfy the above-described (a) or (b) include a method (A1) and a method (A2). The method (A1) refers to a method of stretching the spunbonded nonwoven fabric (stretching treatment) before integrating the spunbonded nonwoven fabric and the fiber web by hydroentangling.

The method (A2) refers to a method in which, at the time of performing an embossing treatment on a spunbond web, an embossing roll having a surface temperature lower than the melting point of a resin constituting plural fibers contained in the spunbond web (hereinafter, also referred to as "resin melting point") and/or an embossing roll having a relatively low linear pressure is/are used. Examples of the stretching include uniaxial stretching, biaxial stretching, three-dimensional shaping, and gear stretching. The surface temperature lower than the resin melting point is preferably (resin melting point - 20°C) or lower, more preferably (resin melting point - 30°C) or lower, still more preferably (resin melting point - 40°C) or lower, particularly preferably (resin melting point - 50°C) or lower.

The hydroentangled nonwoven fabric is a sheet-like material. The structure of the hydroentangled nonwoven fabric is selected as appropriate in accordance with the intended use of the hydroentangled nonwoven fabric, and may be a two-layer structure or a three-layer structure. The hydroentangled nonwoven fabric is suitably used as a substrate of a face mask.

A basis weight of the hydroentangled nonwoven fabric (hereinafter, also referred to as "total basis weight") is not particularly limited and, from the standpoint of the conformability to the skin in a wet state, it is preferably from 30 g/m$^2$ to 110 g/m$^2$, more preferably from 50 g/m$^2$ to 80 g/m$^2$.

The thickness of the hydroentangled nonwoven fabric is adjusted as appropriate in accordance with the intended use and the like of the hydroentangled nonwoven fabric, and it is preferably from 0.4 mm to 0.9 mm, more preferably from 0.5 mm to 0.8 mm.

(1.1) Physical Properties

(1.1.1) Average Coefficient of Friction (MIU) in Wet State

An average coefficient of friction (MIU) of the hydroentangled nonwoven fabric in a wet state is not particularly limited, and it is preferably 0.60 or less, more preferably 0.56 or less. A lower limit of the average coefficient of friction (MIU) is not particularly limited; however, it may be, for example, 0.01 or more. When the average coefficient of friction of the hydroentangled nonwoven fabric in a wet state is in the above-described range, the presence of an irregular shape attributed to the embossed parts is less likely to be noticeable when the hydroentangled nonwoven fabric comes into contact with the skin. In other words, the hydroentangled nonwoven fabric has superior surface smoothness in a wet state. Therefore, when the hydroentangled nonwoven fabric is used as a substrate of a face mask, the face mask gives a more pleasant feel on the skin in a wet state.

A method of measuring the average coefficient of friction (MIU) of the hydroentangled nonwoven fabric in a wet state is the same as the method described below in the section of Examples.

Examples of a method of adjusting the average coefficient of friction (MIU) of the hydroentangled nonwoven fabric in a wet state to be in the above-described range include a method (a1), a method (a2), a method (a3), and a method (a4). The method (a1) refers to a method of using a spunbonded nonwoven fabric that has a low basis weight (e.g., 100 g/m$^2$ or less). The method (a2) refers to a method of using a fiber web that has a high basis weight (e.g., 10 g/m$^2$ or more on each surface of the spunbonded nonwoven fabric). The method (a3) refers to a method of setting the draw ratio in stretching of the spunbonded nonwoven fabric to be high (e.g., 100% or more) to such an extent that does not break the spunbonded nonwoven fabric. The method (a4) refers to a method of using an embossing roll whose surface temperature is adjusted to be lower than the resin melting point (e.g., (melting point - 20°C) or lower).

(1.1.2) Bending Resistance in Wet State

The hydroentangled nonwoven fabric in a wet state has a bending resistance of preferably 45° or less, more preferably 40° or less, still more preferably from 35° to 10°. When the bending resistance of the hydroentangled nonwoven fabric in a dry state is in this range, the hydroentangled nonwoven fabric can be made into a face mask having superior conformability to the skin in a wet state.

A method of measuring the bending resistance of the hydroentangled nonwoven fabric in a wet state is the same as the method described below in the section of Examples.

Examples of a method of adjusting the bending resistance of the hydroentangled nonwoven fabric in a wet state to be in the above-described range include a method (b1), a method (b2), a method (b3), and a method (b4). The method (b1) refers to a method of using a spunbonded nonwoven fabric that has a low basis weight (e.g., 100 g/m$^2$ or less). The method (b2) refers to a method of using a hydroentangled nonwoven fabric that has a low total basis weight (e.g., 110 g/m$^2$ or less). The method (b3) refers to a method of setting the draw ratio in stretching of the spunbonded nonwoven fabric to be high (e.g., 100% or more) to such an extent that does not break the spunbonded nonwoven fabric. The method (b4) refers to a method of using an embossing roll whose surface temperature is adjusted to be lower than the resin melting point (e.g., (resin melting point - 20°C) or lower).

(1.1.3) Maximum Strength in Dry State

A maximum strength of the hydroentangled nonwoven fabric in a state of not being impregnated with a liquid (hereinafter also referred to as "dry state") is not particularly limited, and it is preferably 10 N/50 mm or more, more preferably from 15 N/50 mm to 100 N/50 mm, still more preferably from 20 N/50 mm to 70 N/50 mm. When the maximum strength of the hydroentangled nonwoven fabric in a dry state is in this range, the occurrence of troubles (e.g., necking-in of the web during transport) in the production of a face mask can be inhibited.

A method of measuring the maximum strength of the hydroentangled nonwoven fabric in a dry state is the same as the method described below in the section of Examples.

Examples of a method of adjusting the maximum strength of the hydroentangled nonwoven fabric in a dry state to be in the above-described range include a method (c1), a method (c2), a method (c3), a method (c4), and a method (c5). The method (c1) refers to a method of using a spunbonded nonwoven fabric that has a low basis weight (e.g., 100 g/m$^2$ or less). The method (c2) refers to a method of using a fiber web that has a low basis weight (e.g., 40 g/m$^2$ or less on each surface of the spunbonded nonwoven fabric). The method (c3) refers to a method of using a hydroentangled nonwoven fabric that has a high total basis weight (e.g., 110 g/m$^2$ or more). The method (c4) refers to a method of setting the draw ratio in stretching of the spunbonded nonwoven fabric to be low (e.g., 350% or less). The method (c5) refers to a method of using an embossing roll whose surface temperature is adjusted to be close to the resin melting point (e.g., from (resin melting point - 20°C) to (resin melting point + 20°C)).

(1.1.4) 30% stress in Wet State

A 30% stress of the hydroentangled nonwoven fabric in a wet state is not particularly limited, and it is preferably 7.0 N/50 mm or less, more preferably from 0.3 N/50 mm to 6.5 N/50 mm, still more preferably from 0.4 N/50 mm to 6.0 N/50 mm. When the 30% stress of the hydroentangled nonwoven fabric in a wet state is in this range, it means that the hydroentangled nonwoven fabric has a small stress when stretched. In other words, the hydroentangled nonwoven fabric is easily stretchable. Therefore, at the time of wearing a face mask using the hydroentangled nonwoven fabric, the load is small even if the face mask is stretched. As a result, the hydroentangled nonwoven fabric can be made into a face mask that is easy to wear on the face.

In those applications where stretchability is required, the 30% stress of the hydroentangled nonwoven fabric in a wet state is preferably from 0.4 N/50 mm to 3.0 N/50 mm, more preferably from 0.4 N/50 mm to 2.0 N/50 mm. Meanwhile, in those applications where firmness is required, the 30% stress of the hydroentangled nonwoven fabric in a wet state is preferably from 4.0 N/50 mm to 7.0 N/50 mm, more preferably from 4.0 N/50 mm to 6.5 N/50 mm.

A method of measuring the 30% stress of the hydroentangled nonwoven fabric in a wet state is the same as the method described below in the section of Examples.

Examples of a method of adjusting the 30% stress of the hydroentangled nonwoven fabric in a wet state to be in the above-described range include a method (d1), a method (d2), a method (d3), a method (d4), and a method (d5). The method (d1) refers to a method of using a spunbonded nonwoven fabric that has a low basis weight (e.g., 100 g/m$^2$ or less).

The method (d2) refers to a method of using a fiber web that has a high basis weight (e.g., 10 g/m$^2$ or more on each surface of the spunbonded nonwoven fabric). The method (d3) refers to a method of using a hydroentangled nonwoven fabric that has a low total basis weight (e.g., 110 g/m$^2$ or less). The method (d4) refers to a method of setting the draw ratio in stretching of the spunbonded nonwoven fabric to be high (e.g., 100% or more) to such an extent that does not break the spunbonded nonwoven fabric. The method (d5) refers to a method of using an embossing roll whose surface temperature is adjusted to be lower than the resin melting point (e.g., (resin melting point - 20°C) or lower).

(1.2) Spunbonded Nonwoven Fabric

The hydroentangled nonwoven fabric includes a spunbonded nonwoven fabric.

(1.2.1) Condition (a)

The hydroentangled nonwoven fabric may satisfy the above-described (a). The spunbonded nonwoven fabric included in the hydroentangled nonwoven fabric satisfying the above-described (a) is subjected to an embossing treatment, as a result of which the spunbonded nonwoven fabric contains heat-fused fibers on its surface and inside. In the hydroentangled nonwoven fabric satisfying the above-described (a), a characteristic feature of the invention is that recognizable embossed parts are formed on the surface of the spunbonded nonwoven fabric coming into contact with the skin. In other words, the spunbonded nonwoven fabric has plural embossed parts in which some of the plural fibers contained in the spunbonded nonwoven fabric are fused, and the plural embossed parts may be arranged in an irregular pattern. This leads to a lower 30% stress of the hydroentangled nonwoven fabric in a wet state as compared to a case where the hydrogenated nonwoven fabric satisfies the above-described (b). In other words, at the time of wearing a face mask using the hydroentangled nonwoven fabric, the load is smaller even if the face mask is stretched. This is presumed to be because the spunbonded nonwoven fabric has the embossed parts that withstand a stretching process to a certain extent. Further, it is presumed that, due to relaxation of the plural fibers contained in the spunbonded nonwoven fabric by the stretching process, the 30% stress is considerably less likely to be affected by the spunbonded nonwoven fabric. When the spunbonded nonwoven fabric is stretched after the embossing treatment, the hydroentangled nonwoven fabric using the spunbonded nonwoven fabric is unlikely to have holes, and exhibits excellent processing characteristics.

(1.2.2) Condition (b)

The hydroentangled nonwoven fabric may also satisfy the above-described (b). In the hydroentangled nonwoven fabric satisfying the above-described (b), the spunbonded nonwoven fabric contains heat-fused fibers inside, but does not have an embossed part on its surface. This leads to superior transportability of the hydroentangled nonwoven fabric (e.g., unlikeliness of being necked in) during the production of a face mask as compared to a case where the hydrogenated nonwoven fabric satisfies the above-described (a). When the hydroentangled nonwoven fabric satisfies the above-described (b), even if the spunbonded nonwoven fabric does not have an embossed part on its surface, the plural fibers contained in the spunbonded nonwoven fabric are not relaxed. Therefore, it is presumed that the superior transportability during the production of a face mask is attributed to large contribution of the spunbonded nonwoven fabric to the maximum strength in a dry state.

A basis weight of the spunbonded nonwoven fabric is not particularly limited, and it is preferably from 5 $g/m^2$ to 100 $g/m^2$. In order to convert a web into a nonwoven fabric by a needle punching method, the basis weight of the web usually needs to be more than 100 $g/m^2$. The property that the spunbonded nonwoven fabric has a basis weight of 100 $g/m^2$ indicates that the plural fibers contained in the spunbonded nonwoven fabric are not mechanically entangled.

From the standpoint of weight reduction and the like, the basis weight of the spunbonded nonwoven fabric is more preferably from 5 $g/m^2$ to 70 $g/m^2$, still more preferably from 10 $g/m^2$ to 60 $g/m^2$, particularly preferably from 10 $g/m^2$ to 50 $g/m^2$, further preferably from 15 $g/m^2$ to 40 $g/m^2$, still further preferably from 16 $g/m^2$ to 35 $g/m^2$. Especially, when the basis weight of the spunbonded nonwoven fabric is 40 $g/m^2$ or less, water is more likely to spread throughout the inside of the spunbonded nonwoven fabric than when the basis weight is 100 $g/m^2$. Therefore, a face mask using the spunbonded nonwoven fabric having a basis weight of 40 $g/m^2$ exhibits superior lotion impregnation. When the spunbonded nonwoven fabric satisfies the condition (a) or (b) and has the above-described basis weight, superior conformability to the skin is obtained.

From the standpoint of the conformability to the skin, a ratio of the basis weight of the spunbonded nonwoven fabric with respect to the total basis weight of the hydroentangled nonwoven fabric is preferably from 0.10 to 0.75, more preferably from 0.15 to 0.70, still more preferably from 0.20 to 0.65, particularly preferably from 0.25 to 0.60.

From the standpoint of the conformability to the skin as well as the standpoint of obtaining both favorable liquid impregnation and lightweight feeling in wearing, a ratio of the basis weight of the spunbonded nonwoven fabric with respect to a basis weight of the fiber web is preferably from 0.45 to 2.00, more preferably from 0.40 to 1.80, still more preferably from 0.35 to 1.60, particularly preferably from 0.30 to 1.40.

It is preferred that the basis weight of the spunbonded nonwoven fabric is from 15 $g/m^2$ to 40 $g/m^2$, and that the ratio of the basis weight of the spunbonded nonwoven fabric with respect to the basis weight of the fiber web is from 0.35 to 1.60. This enables to obtain a nonwoven fabric that not only has the high impregnation properties of the fiber web and the moderate firmness of the spunbonded nonwoven fabric, but also better conforms to the skin.

The thickness of the spunbonded nonwoven fabric is selected as appropriate in accordance with the intended use and the like of the hydroentangled nonwoven fabric, and it is preferably from 0.1 mm to 0.7 mm, more preferably from 0.15 mm to 0.6 mm.

(1.2.3) Fibers

The spunbonded nonwoven fabric composed of long fibers may contain plural fibers. The plural fibers may include plural spunbonded nonwoven fabrics or other long fibers, and may further include short fibers. A cross-sectional shape of the fibers is not particularly limited, and examples thereof include a circular shape, an elliptical shape, and an irregular shape.

The fibers may be composite fibers or single-component fibers, and are selected as appropriate in accordance with the intended use and the like of the hydroentangled nonwoven fabric. The composite fibers preferably contain two or more kinds of thermoplastic resins as constituents. Examples of the composite fibers include composite fibers of a core-sheath type, a side-by-side type, a sea-island type, a parallel type, and the like. The core-sheath-type composite fibers may each have a core portion and a sheath portion, and may be either concentric core-sheath-type composite fibers or eccentric core-sheath-type composite fibers. In the eccentric core-sheath-type composite fibers, the core portion may or may not be exposed to the surface. The sea-island-type composite fibers each have a sea phase and plural island phases.

(1.2.4) Physical Properties

The spunbonded nonwoven fabric may be a stretchable spunbonded nonwoven fabric, an extensible spunbonded nonwoven fabric, or a spunbonded nonwoven fabric that is different from an extensible spunbonded nonwoven fabric and a stretchable spunbonded nonwoven fabric (such a spunbonded nonwoven fabric is hereinafter also referred to as "normal spunbonded nonwoven fabric").

The "stretchable spunbonded nonwoven fabric" refers to a spunbonded nonwoven fabric with elasticity, and it is also called an elastic nonwoven fabric. A spunbonded nonwoven fabric with elasticity has a first property and a second property. The "first property" refers to a property that, when an external force is applied to the spunbonded nonwoven fabric, the outer shape of the spunbonded nonwoven fabric extends in one direction. The "second property" refers to a property that, when the external force applied to the spunbonded nonwoven fabric is removed, an original outer shape of the spunbonded nonwoven fabric is restored. Specifically, the stretchable spunbonded nonwoven fabric has a residual strain of usually 50% or less, preferably 35% or less, still more preferably 30% or less, after 100% elongation.

When the hydroentangled nonwoven fabric includes such a stretchable spunbonded nonwoven fabric, a face mask using the hydroentangled nonwoven fabric has an elasticity. Therefore, when the face mask using the hydroentangled nonwoven fabric is stretched in the vertical direction in a wet state and applied to the face, contraction of the face mask causes the facial muscles to partially contract in the vertical direction. Accordingly, the face mask of the disclosure can be expected to have, for example, a lift-up effect.

The "extensible spunbonded nonwoven fabric" refers to a spunbonded nonwoven fabric with extensibility. A spunbonded nonwoven fabric with extensibility has a third property and a fourth property. The "third property" refers to a property that, when an external force is applied to the spunbonded nonwoven fabric, the outer shape of the spunbonded nonwoven fabric extends in one direction. The "fourth property" refers to a property that, even when the external force applied to the spunbonded nonwoven fabric is removed, an original outer shape of the spunbonded nonwoven fabric is hardly restored. Specifically, the extensible spunbonded nonwoven fabric has a maximum elongation of 50% or more, preferably 70% or more, more preferably 100% or more, and exhibits hardly any elastic recovery. The extensible spunbonded nonwoven fabric may contain composite fibers as well.

The extensible spunbonded nonwoven fabric can be subjected to a stretching process. Therefore, by providing the hydroentangled nonwoven fabric with the extensible spunbonded nonwoven fabric, the 30% stress of the hydroentangled nonwoven fabric can be reduced.

(1.2.4.1) Stretchable Spunbonded Nonwoven Fabric

The plural fibers contained in the spunbonded nonwoven fabric may include stretchable long fibers, or may consist of stretchable long fibers. The term "stretchable long fibers" used herein refers to long fibers that can be used to produce a stretchable spunbonded nonwoven fabric by a method of producing a spunbonded nonwoven fabric using stretchable long fibers. In other words, the stretchable spunbonded nonwoven fabric contains stretchable long fibers.

Examples of the stretchable long fibers include thermoplastic polyurethane-based elastomer long fibers and olefin-based elastomer resin long fibers. The "thermoplastic polyurethane-based elastomer long fibers" refers to long fibers made of a thermoplastic polyurethane-based elastomer. The "olefin-based elastomer resin long fibers" refers to long fibers made of an olefin-based elastomer resin. Among these fibers, the stretchable long fibers preferably include thermoplastic polyurethane-based elastomer long fibers, more preferably consist of thermoplastic polyurethane-based elastomer long fibers.

When the stretchable spunbonded nonwoven fabric contains long fibers of a thermoplastic polyurethane-based elastomer (A) and long fibers of an olefin resin (B), the long fibers of the thermoplastic polyurethane-based elastomer (A) and the long fibers of the olefin resin (B) may be contained at a ratio of [10% by mass to 90% by mass:90% by mass to 10% by mass] ((A):(B), wherein (A) + (B) = 100% by mass).

From the standpoint of stretchability and flexibility, the ratio of the long fibers of the thermoplastic elastomer (A) in the stretchable spunbonded nonwoven fabric is preferably 20% by mass or more, more preferably 30% by mass or more. From the standpoint of workability (stickiness resistance), the ratio of the long fibers of the thermoplastic elastomer (A) in the stretchable spunbonded nonwoven fabric is preferably 70% by mass or less, more preferably 60% by mass or less. The long fibers of the olefin resin (B) are desirably made of an olefin resin described below in "(1.2.4.1.2) Olefin Resin".

(1.2.4.1.1) Thermoplastic Polyurethane-Based Elastomer

The thermoplastic polyurethane-based elastomer is an elastomer typified by a block copolymer in which a hard segment is composed of a polyurethane and a soft segment is composed of a polycarbonate-based polyol, an ether-based polyol, a caprolactone-based polyester, an adipate-based polyester, or the like.

Among thermoplastic polyurethane-based elastomers, one having a solidification start temperature of 65°C or higher, preferably 75°C or higher, more preferably 85°C or higher is preferred. The solidification start temperature is preferably 195°C or lower. The "solidification start temperature", which is a value measured using a differential scanning calorimeter (DSC), is the start temperature of an exothermic peak attributed to solidification of the thermoplastic polyurethane-based elastomer that occurs when the thermoplastic polyurethane-based elastomer is heated to 230°C at a rate of 10°C/min, maintained at 230°C for 5 minutes, and then cooled at a rate of 10°C/min. When the solidification start temperature is 65°C or higher, at the time of obtaining a spunbonded nonwoven fabric, not only forming defects such as fusion of fibers, fiber breakage, and resin aggregation can be inhibited, but also a formed stretchable spunbonded nonwoven fabric can be prevented from winding around an embossing roller in a thermal embossing process. The resulting spunbonded nonwoven fabric has low stickiness and can thus be preferably used as a material coming into contact with the skin, such as a face mask, a clothing material, a hygienic material, or a material of sporting goods. Meanwhile, by controlling the solidification start temperature to be 195°C or lower, the forming processability can be improved. It is noted here that formed fibers tend to have a higher solidification start temperature than that of the thermoplastic polyurethane-based elastomer used in the fibers.

In order to adjust the solidification start temperature of the thermoplastic polyurethane-based elastomer to be 65°C or higher, it is necessary to not only select compounds each having an optimum chemical structure as a polyol, an isocyanate compound, and a chain extender that are used as raw materials of the thermoplastic polyurethane-based elastomer, but also adjust the amount of hard segment. The "amount of hard segment" refers to a value in mass percent (% by mass) which is calculated by dividing a total mass of the isocyanate compound and the chain extender that are used in the production of the thermoplastic polyurethane-based elastomer by a total amount of the polyol, the isocyanate compound, and the chain extender, and then multiplying the resulting value by 100. The amount of hard segment is preferably from 20% by mass to 60% by mass, more preferably from 22% by mass to 50% by mass, still more preferably from 25% by mass to 48% by mass.

The number of particles of polar solvent-insoluble components in the thermoplastic polyurethane-based elastomer is preferably 3,000,000 (3,000,000/g) or less, more preferably 2,500,000/g or less, still more preferably 2,000,000/g or less, with respect to 1 g of the thermoplastic polyurethane-based elastomer. The "polar solvent-insoluble components in the thermoplastic polyurethane-based elastomer" are mainly aggregates generated during the production of the thermoplastic polyurethane-based elastomer, such as fisheyes and gels. Examples of a cause of the generation of the polar solvent-insoluble components include: components derived from aggregates of the hard segment of the thermoplastic polyurethane-based elastomer; components generated by crosslinking of the hard segment and/or the soft segment via allophanate bonds, biuret bonds, and the like; and components generated by a chemical reaction between raw materials constituting the thermoplastic polyurethane-based elastomer.

The number of particles of the polar solvent-insoluble components is a value determined by dissolving the thermoplastic polyurethane-based elastomer in a dimethylacetamide solvent and measuring the resulting insoluble components using a particle size distribution analyzer that utilizes a pore electrical resistance method and is fitted with a 100-$\mu$m aperture. By fitting the analyzer with a 100-$\mu$m aperture, the number of particles of from 2 $\mu$m to 60 $\mu$m can be measured in terms of non-crosslinked polystyrene. By controlling the number of particles of the polar solvent-insoluble components to be 3,000,000/g or less, the occurrence of problems, such as an increase in the fiber diameter distribution and fiber breakage during spinning, can be further inhibited within the solidification start temperature range of the thermoplastic polyurethane-based elastomer. The thermoplastic polyurethane-based elastomer having a low content of the polar solvent-insoluble components can be obtained by performing a polymerization reaction of the polyol, the isocyanate compound, and the chain extender, and subsequently filtering the resultant.

From the standpoint of inhibiting the incorporation of air bubbles into a strand and the occurrence of fiber breakage during the forming of a nonwoven fabric using a large-sized spunbond forming machine, the thermoplastic polyurethane-based elastomer has a water content of preferably 350 ppm or less, more preferably 300 ppm, or less, still more preferably 150 ppm or less. By setting the water content of the thermoplastic polyurethane-based elastomer used as a raw material of the spunbonded nonwoven fabric in the above-described range, a nonwoven fabric that not only has the high impregnation properties of the fiber web and the moderate firmness of the spunbonded nonwoven fabric but also better conforms to the skin can be obtained. It is noted here that the water content is 300 ppm or less in all of Examples 1 to 3 of the present application.

In the thermoplastic polyurethane-based elastomer, from the standpoint of stretchability, a sum (a) of the heat of fusion that is determined from an endothermic peak having a peak temperature in a range of from 90°C to 140°C and a sum (b) of the heat of fusion that is determined from an endothermic peak having a peak temperature in a range of higher than 140°C but 220°C or lower, which are measured using a differential scanning calorimeter (DSC), preferably satisfy the relationship of the following Formula (I), more preferably satisfy the relationship of the following Formula (II), still more preferably satisfy the relationship of the following Formula (III).

$$\text{Formula (I): } a/(a + b) \leq 0.8$$

$$\text{Formula (II): } a/(a + b) \leq 0.7$$

$$\text{Formula (III): } a/(a + b) \leq 0.55$$

The value of "a/(a + b)" means a ratio (unit: %) of the heat of fusion of the hard domain of the thermoplastic polyurethane-based elastomer. When the ratio of the heat of fusion of the hard domain of the thermoplastic polyurethane-based elastomer is 80% or lower, the strength and the stretchability of the fibers, particularly those of the fibers and the nonwoven fabric in a mixed-fiber spunbonded nonwoven fabric, are improved. In the disclosure, a lower limit value of the ratio of the heat of fusion of the hard domain of the thermoplastic polyurethane-based elastomer is preferably about 0.1%.

The thermoplastic polyurethane-based elastomer has a melt viscosity of preferably from 100 Pa·s to 3,000 Pa·s, more preferably from 200 Pa·s to 2,000 Pa·s, still more preferably from 1,000 Pa·s to 1,500 Pa·s, at a temperature of 200°C and a shear rate of 100 sec$^{-1}$. The "melt viscosity" is a value measured by CAPIROGRAPH (manufactured by Toyo Seiki Seisaku-sho, Ltd., nozzle length: 30 mm, diameter: 1 mm).

The thermoplastic polyurethane-based elastomer having the above-described properties can be obtained by, for example, the production method disclosed in JP-A No. 2004-244791.

A mixed-fiber spunbonded nonwoven fabric formed using the thermoplastic polyurethane-based elastomer has excellent texture and can thus be preferably used in applications that come into contact with the skin, such as face masks and hygienic materials. The thermoplastic polyurethane-based elastomer is industrially preferred as well since it hardly causes clogging of a filter arranged inside an extruder for filtration of impurities and the like, and thus reduces the frequency of adjustment and maintenance of an equipment.

(1.2.4.1.2) Olefin Resin

The olefin resin is preferably a crystalline polymer. Examples of a crystalline component in the crystalline polymer include polypropylene, poly-1-butene, and poly-4-methyl-1-pentene. The olefin resin may be used singly, or in combination of two or more kinds thereof.

The olefin resin may be, for example, a propylene polymer (A) or a polyolefin (excluding the propylene polymer (A)). The propylene polymer (A) and the polyolefin (excluding the propylene polymer (A)) may each be used singly, or in combination of two or more kinds that are different from each other in melting point, molecular weight, crystal structure, and the like.

(1.2.4.1.2.1) Propylene Polymer (A)

The propylene polymer (A) contains a structural unit derived from propylene.

The propylene polymer (A) is a propylene homopolymer or a propylene copolymer. The propylene copolymer is preferably a copolymer of propylene and one or more kinds of $\alpha$-olefins.

The number of carbon atoms of the $\alpha$-olefins is 2 or more (excluding 3), preferably from 2 to 8 (excluding 3). Specific examples of the $\alpha$-olefins in the propylene copolymer include ethylene, 1-butene, 1-pentene, 1-hexene, 1-octene, and 4-methyl-1-pentene.

Thereamong, the propylene polymer (A) preferably contains a propylene homopolymer, more preferably is a propylene homopolymer.

The propylene polymer (A) has a melting point of preferably 140°C or higher, more preferably 150°C or higher, still more preferably 155°C or higher, particularly preferably from 157°C to 165°C.

A method of measuring the melting point of the propylene polymer (A) is the same as the method described below in the section of Examples.

A melt flow rate (MFR) of the propylene polymer (A) is not particularly limited as long as a first resin composition can be melt-spun, and the MFR is preferably from 1 g/10 min to 1,000 g/10 min, more preferably from 5 g/10 min to 500 g/10 min, still more preferably from 10 g/10 min to 100 g/10 min.

A method of measuring the MFR of the propylene polymer (A) conforms to ASTM D-1238, and the measurement is performed under the conditions of 230°C and a load of 2.16 kg.

The content of the propylene polymer (A) is preferably from 55.0% by mass to 95.0% by mass, more preferably from 65.0% by mass to 95.0% by mass, still more preferably from 75.0% by mass to 95.0% by mass, particularly preferably from 85.0% by mass to 95.0% by mass, with respect to a total amount of the olefin resin.

The propylene polymer (A) may be a commercially available product.

(1.2.4.1.2.2) Biomass-Derived Propylene Polymer

The propylene polymer (A) may also be a biomass-derived propylene polymer.

The "biomass-derived propylene polymer" refers to the propylene polymer (A) that is produced from a raw material monomer containing biomass-derived propylene. Since the biomass-derived propylene polymer is a carbon-neutral material, it can reduce the environmental load in the production of a hydroentangled nonwoven fabric.

The monomer containing biomass-derived propylene, which is a raw material of the biomass-derived propylene polymer, can be obtained by cracking of biomass naphtha or synthesis from biomass-derived ethylene. The biomass-derived propylene polymer can be obtained by polymerizing the thus obtained monomer containing biomass-derived propylene by the same method as in the case of using conventionally known petroleum-derived propylene.

A propylene polymer synthesized using a monomer containing biomass-derived propylene as a raw material is a biomass-derived propylene polymer. The content of the biomass-derived propylene polymer in a raw material monomer is more than 0% by mass, and may be 100% by mass or less, with respect to a total amount of the raw material monomer.

The raw material monomer of the biomass-derived propylene polymer may further contain propylene derived from a fossil fuel such as petroleum, and/or an $\alpha$-olefin other than ethylene and propylene (e.g., 1-butene or 1-hexene), in addition to biomass-derived propylene.

The biomass-derived propylene polymer can also be obtained by polymerizing propylene that is obtained by synthesis of olefins from methanol (MTO: Methanol-to-Olefins) or propylene from methanol (MTP: Methanol-to-Propylene) using a gas generated by pyrolysis of empty fruit bunches (EFB) such as coconut shells.

The biomass-derived propylene polymer can also be obtained by polymerizing propylene that is obtained by dehydration of isopropanol produced by fermentation from a biomass raw material mainly composed of a non-edible plant such as sorgo.

When the content of radioactive carbon ($C^{14}$) in a monomer used as a raw material, such as propylene, is defined as PC14, the content ratio Pbio (%) of biomass-derived carbon in the raw material can be calculated by the following formula:

$$\text{Formula (2): Pbio(\%)} = PC14/105.5 \times 100$$

In other words, when all of raw materials of the propylene polymer are derived from biomass, the content ratio of biomass-derived carbon is theoretically 100%. Therefore, the biomass degree of the resulting biomass-derived propylene polymer is 100%. Since a fossil fuel-derived raw material contains hardly any $C^{14}$, the content ratio of biomass-derived carbon in a propylene polymer produced only from the fossil fuel-derived raw material is 0%, and the resulting fossil fuel-derived propylene polymer thus has a biomass degree of 0%.

The "biomass degree" refers to a content ratio of biomass-derived carbon, which is determined by measuring radioactive carbon ($C^{14}$). Carbon dioxide in the atmosphere contains $C^{14}$ at a certain ratio (about 105.5 pMC). Therefore, the $C^{14}$ content in those plants (e.g., corn) that grow by absorbing carbon dioxide in the atmosphere are known to be about 105.5 pMC. It is also known that fossil fuels contain hardly any $C^{14}$. Accordingly, the content ratio of biomass-derived carbon in a raw material can be determined by measuring the ratio of $C^{14}$ contained in all carbon atoms of the propylene polymer.

The biomass degree of the propylene polymer used as a raw material of the hydroentangled nonwoven fabric of the disclosure is preferably 10% or higher.

The content of the biomass-derived propylene polymer used in hydroentangled nonwoven fabric of the disclosure may be from 5% by mass to 99% by mass, from 10% by mass to 75% by mass, or from 20% by mass to 50% by mass, with respect to a total of 100% by mass of a fossil fuel-derived polypropylene resin and a biomass-derived polypropylene resin.

The propylene polymer (A) used as a raw material of the hydroentangled nonwoven fabric of the disclosure may also contain a so-called recycled polymer that is a propylene polymer obtained by recycling.

The term "recycled polymer" encompasses a polymer obtained by recycling of a waste polymer product, and a recycled polymer can be produced by, for example, the method disclosed in DE 102019127827 (A1). The recycled polymer may contain a marker with which the polymer can be identified as a product of recycling.

(1.2.4.1.2.3) Polyolefin

The polyolefin (excluding the propylene polymer (A)) is an $\alpha$-olefin homo- or copolymer. The $\alpha$-olefin is an $\alpha$-olefin having 2 or more carbon atoms (excluding those having 3 carbon atoms), and preferably contains a homopolymer of an $\alpha$-olefin having from 2 to 8 carbon atoms (excluding those having 3 carbon atoms), more preferably is a homopolymer of an $\alpha$-olefin having from 2 to 8 carbon atoms (excluding those having 3 carbon atoms). Specific examples of the $\alpha$-olefin include

ethylene, 1-butene, 1-pentene, 1-hexene, 1-octene, and 4-methyl-1-pentene. Thereamong, the α-olefin is preferably ethylene.

Specific examples of the polyolefin (excluding the propylene polymer (A)) include a polyethylene (ethylene homopolymer), a 1-butene polymer, and poly-4-methyl-1-pentene.

Examples of the polyethylene include high-pressure low-density polyethylenes, linear low-density polyethylenes (LLDPE), and high-density polyethylenes (HDPE).

Examples of the 1-butene polymer include 1-butene homopolymers, 1-butene-ethylene copolymers, and 1-butene-propylene copolymers.

From the standpoint of improving the tensile strength of the spunbonded nonwoven fabric as well as from the standpoint of the extensibility and the flexibility of the spunbonded nonwoven fabric, the polyethylene has a density of preferably from 0.94 g/cm$^3$ to 0.98 g/cm$^3$, more preferably from 0.94 g/cm$^3$ to 0.97 g/cm$^3$.

The polyolefin (excluding the propylene polymer (A)) has a melting point of preferably 150°C or higher, more preferably 155°C or higher, still more preferably from 155°C to 165°C.

An MFR of the polyolefin (excluding the propylene polymer (A)) is not particularly limited as long as a melt of the olefin resin can be spun, and the MFR is preferably from 1 g/10 min to 1,000 g/10 min, more preferably from 2 g/10 min to 500 g/10 min, still more preferably from 3 g/10 min to 100 g/10 min.

When the polyolefin (excluding the propylene polymer (A)) is a polyethylene, a method of measuring the MFR conforms to ASTM D-1238, and the measurement is performed under the conditions of 190°C and a load of 2.16 kg.

The content of the polyolefin (excluding the propylene polymer (A)) is preferably from 1.0% by mass to 10.0% by mass, more preferably from 3.0% by mass to 8.0% by mass, still more preferably from 5.0% by mass to 7.0% by mass, with respect to a total amount of the olefin resin. As long as the content of the polyolefin (excluding the propylene polymer (A)) is in this range, the extensibility of the spunbonded nonwoven fabric is improved.

(1.2.4.1.2.4) Other Polymers

The olefin resin may or may not contain polymers other than olefin polymers (hereinafter, also referred to as "other polymers"). Examples of the other polymers include thermoplastic elastomers, and thermoplastic resins other than olefin polymers.

Specific examples of the thermoplastic elastomers include styrene-based elastomers, polyester-based elastomers, polyamide-based elastomers, thermoplastic polyurethane-based elastomers, vinyl chloride-based elastomers, and fluorine-based elastomers.

Specific examples of the thermoplastic resins other than olefin polymers include polyesters, polyamides (e.g., nylon-6, nylon-66, and poly(*m*-xylene adipamide)), polyvinyl chlorides, polyimides, ethylene-vinyl acetate copolymers, ethylene-vinyl acetate-vinyl alcohol copolymers, ethylene-(meth)acrylic acid copolymers, ethylene-acrylate-carbon monoxide copolymers, polyacrylonitriles, polycarbonates, and polystyrenes.

The polyesters are, for example, aliphatic polyesters or polyester copolymers. Examples of the polyester copolymers include those obtained by polymerizing an aliphatic dicarboxylic acid alone, or a mixture of an aliphatic dicarboxylic acid and an aromatic dicarboxylic acid, with one or more kinds of diols.

The content of the polyolefin (excluding the propylene polymer (A)) in the spunbonded nonwoven fabric is preferably more than 90% by mass but 100% by mass or less, more preferably from 95% by mass to 100% by mass, with respect to a total amount of the polyolefin (excluding the propylene polymer (A)) and the other polymers (thermoplastic elastomers and thermoplastic resins other than olefin polymers).

The spunbonded nonwoven fabric does not contain the other polymers, or the content of the other polymers (thermoplastic elastomers and thermoplastic resins other than olefin polymers) in the spunbonded nonwoven fabric is preferably more than 0% but less than 10% by mass, more preferably more than 0% but 5% by mass or less, with respect to a total amount of the olefin polymers and the other polymers.

When the olefin resin contains the propylene polymer (A) and an ethylene polymer, the content of the propylene polymer (A) is preferably from 80% by mass to 99% by mass, more preferably from 84% by mass to 96% by mass, with respect to a total amount of a stretchable composition. The content of the ethylene polymer is preferably from 20% by mass to 1% by mass, more preferably from 16% by mass to 4% by mass, with respect to a total amount of a resin composition (SB) (provided that: propylene polymer (A) + ethylene polymer = 100% by mass).

(1.2.4.1.2.5) Lubricant

The olefin resin may or may not further contain a lubricant.

As the lubricant, any known lubricant that is blended in commonly and widely recognized plastics can be used. For example, any of the lubricants listed on pages 1,037 to 1,038 of Chemical Handbook: Applied Chemistry, revised 2nd edition (edited by the Chemical Society of Japan, 1973, published by Maruzen Publishing Co., Ltd.) can be used. Specific examples of the lubricant include organopolysiloxanes, fluorine-based polymers, fatty acid amides, metal soaps, esters, calcium carbonate, and silicates. These lubricants may be used singly, or in combination of two or more kinds thereof.

The lubricant preferably contains a fatty acid amide having from 15 to 22 carbon atoms. The term "number of carbon atoms of the fatty acid amide" used herein means the number of carbon atoms contained in a molecule, and the carbon atom of -CONH constituting an amide is also included in the number of carbon atoms. The number of carbon atoms of the fatty acid amide is preferably from 18 to 22. Examples of the fatty acid amide having from 15 to 22 carbon atoms include fatty acid monoamide compounds, fatty acid diamide compounds, saturated fatty acid monoamide compounds, and unsaturated fatty acid diamide compounds, among which palmitic acid amide (number of carbon atoms: 16), stearic acid amide (number of carbon atoms: 18), oleic acid amide (number of carbon atoms: 18), erucic acid amide (number of carbon atoms: 22), and the like are preferred.

When the olefin resin contains a lubricant, the ratio of the lubricant with respect to a total amount of the olefin resin is preferably from 0.1% by mass to 5.0% by mass, more preferably from 0.1% by mass to 3.0% by mass, still more preferably from 0.1% by mass to 1.0% by mass.

(1.2.4.1.2.6) Optional Components

The olefin resin may or may not contain various known additives, examples of which include antioxidants, heat stabilizers, weathering stabilizers, antistatic agents, slip agents, antifogging agents, dyes, pigments, natural oils, synthetic oils, waxes, and hydrophilic agents, as optional components within a range that does not hinder the object of the disclosure.

(1.2.4.2) Extensible Spunbonded Nonwoven Fabric

The plural fibers contained in the spunbonded nonwoven fabric may include extensible long fibers, or may consist of extensible long fibers. The term "extensible long fibers" used herein refers to long fibers that can be used to produce an extensible spunbonded nonwoven fabric by a method of producing a spunbonded nonwoven fabric using extensible long fibers. In other words, the extensible spunbonded nonwoven fabric contains extensible long fibers.

The extensible long fibers preferably include long fibers of an olefin resin. Olefin resins are highly versatile resins. When the extensible long fibers include long fibers of an olefin resin, an extensible spunbonded nonwoven fabric can be produced inexpensively. Examples of the olefin resin include the same ones as those exemplified above for the olefin resin of the olefin resin long fibers included in the stretchable long fibers.

(1.2.4.3) Normal Spunbonded Nonwoven Fabric

The plural fibers contained in the spunbonded nonwoven fabric may include long fibers of an olefin resin, or may consist of long fibers of an olefin resin. Examples of the olefin resin include the same ones as those exemplified above for the olefin resin of the olefin resin long fibers included in the stretchable long fibers. Thereamong, the olefin resin preferably contains a polypropylene, more preferably consists of a polypropylene.

It is preferred that the hydroentangled nonwoven fabric satisfies the above-described (b) and the plural fibers include long fibers of an olefin resin. Olefin resins are highly versatile resins. When the hydroentangled nonwoven fabric satisfies the above-described (b) and the plural fibers include long fibers of an olefin resin, an extensible spunbonded nonwoven fabric can be produced inexpensively.

(1.3) Fiber Web

The hydroentangled nonwoven fabric includes a fiber web.

A basis weight of the fiber web is not particularly limited and, from the standpoint of obtaining both favorable liquid impregnation and lightweight feeling in wearing, it is preferably from 10 g/m$^2$ to 80 g/m$^2$, more preferably from 20 g/m$^2$ to 70 g/m$^2$, still more preferably from 30 g/m$^2$ to 60 g/m$^2$.

From the standpoint of the conformability to the skin as well as the standpoint of obtaining both favorable liquid impregnation and lightweight feeling in wearing, a ratio of the basis weight of the fiber web with respect to the total basis weight of the hydroentangled nonwoven fabric is preferably from 0.25 to 0.90, more preferably from 0.30 to 0.85, still more preferably from 0.35 to 0.80, particularly preferably from 0.40 to 0.75.

The thickness per layer of the fiber web is selected as appropriate in accordance with the intended use and the like of the hydroentangled nonwoven fabric, and it is preferably from 0.05 mm to 0.30 mm, more preferably from 0.10 mm to 0.20 mm.

The fiber web is composed of natural fibers or regenerated cellulose fibers. A web composed of natural fibers is hereinafter referred to as "natural fiber web". A web composed of regenerated cellulose fibers is hereinafter referred to as "regenerated cellulose fiber web". Particularly, the fiber web preferably includes a regenerated cellulose fiber web, or preferably composed of a regenerated cellulose fiber web consisting of only regenerated cellulose fibers. When the fiber web includes a regenerated cellulose fiber web, favorable liquid impregnation is obtained, so that favorable touch to the skin in wearing can be provided.

It is preferred that the fiber web is bonded to both main surfaces of the spunbonded nonwoven fabric by hydroentangling, and that the fiber web is composed of regenerated cellulose fibers. This enables to obtain a sheet that can retain a large amount of liquid and has favorable touch to the skin in wearing.

(1.3.1) Regenerated Cellulose Fiber Web

The regenerated cellulose fiber web is composed of regenerated cellulose fibers. The regenerated cellulose fibers may be long fibers, or may be short fibers. A cross-sectional shape of the fibers is not particularly limited, and examples thereof include a circular shape, an elliptical shape, and an irregular shape. Examples of the regenerated cellulose fibers include rayon fibers, cupra fibers, and lyocell fibers. Hereinafter, a regenerated cellulose fiber web composed of rayon fibers is also referred to as "rayon web"; a regenerated cellulose fiber web composed of a cupra nonwoven fabric is also referred to as "cupra web"; and a regenerated cellulose fiber web composed of lyocell fibers is also referred to as "lyocell web".

The regenerated cellulose fiber web may be, for example, a rayon web, a cupra web, or a lyocell web. Particularly, the fiber web is preferably composed of rayon fibers. When the fiber web is composed of rayon fibers, a face mask that exhibits superior liquid impregnation and superior conformability to the skin in a wet state can be obtained.

(1.3.2) Natural Fiber Web

The natural fiber web is composed of natural fibers. The natural fibers may be long fibers, or may be short fibers. A cross-sectional shape of the fibers is not particularly limited, and examples thereof include a circular shape, an elliptical shape, and an irregular shape.

Examples of the natural fibers include wood flour (obtained by peeling off a wood bark and processing the peeled bark using a pulverizer), wood fibers, bamboo flour, bamboo fibers, isolated cellulose fibers, wool, agricultural fibers, wood pulps (pulps made from a wood raw material; obtained by removing the bark from the trunk of a tree, making the bark into chips as is, and then subjecting the chips to a mechanical, scientific, or complex treatment), other natural pulps, rayon, and cotton. Examples of the agricultural fibers include wheat straw, rice straw, hemp, flax, kenaf, kapok, jute, ramie, sisal hemp, henequen, corn fibers, coir, nut shells, and rice husks. Examples of the wood pulps include NBKP (Nadelholz bleached kraft pulp) and LBKP (Laubholz bleached kraft pulp). Examples of the other natural pulps include Manila hemp, paper mulberry, paperbush, and gampi.

(2) Face Mask

The face mask of the disclosure includes the hydroentangled nonwoven fabric of the disclosure. This allows the face mask to have excellent conformability to the skin in a wet state.

The face mask may include: a covering part that covers at least a portion of the wearer's face; and ear loops that extend from both sides of the covering part. The covering part and the ear loops are integrated. The covering part and the ear loops each include the hydroentangled nonwoven fabric of the disclosure.

The face mask may or may not further include a liquid impregnated into the hydroentangled nonwoven fabric. The liquid may be, for example, a lotion. The lotion contains water and various components. Examples of the various components include glycerin, propanediol, *Tropaeolum majus* flower extract, *Tropaeolum majus* leaf extract, *Tropaeolum majus* stem extract, *Citrus aurantium bergamia* fruit extract, *Olea europaea* leaf extract, *Cryptomeria japonica* bud extract, polyethylene glycol (PEG)/polypropylene glycol (PPG)/polybutylene glycol-8/5/3 glycerin, diglycerin, sodium citrate, bis-ethoxydiglycol cyclohexane-1,4-dicarboxylate, xanthan gum, PEG-40 hydrogenated castor oil, citric acid, butylene glycol (BG), tocopherol, ethylhexyl glycerin, phenoxyethanol, methylparaben, and fragrances.

(3) Method of Producing Hydroentangled Nonwoven Fabric

The method of producing a hydroentangled nonwoven fabric according to the disclosure includes: preparing a spunbond web (hereinafter, also referred to as "first preparation step"); preparing a spunbonded nonwoven fabric precursor that contains heat-fused fibers (hereinafter, also referred to as "embossing treatment step"); preparing a fiber web precursor (hereinafter, also referred to as "second preparation step"); forming a laminated body (hereinafter, also referred to as "layering step"); and producing a hydroentangled nonwoven fabric (hereinafter, also referred to as "hydroentanglement step").

The first preparation step and the embossing treatment step are performed in the order mentioned. After the embossing treatment step and the second preparation step are performed, the layering step and the hydroentanglement step are performed in the order mentioned.

The method of producing a hydroentangled nonwoven fabric according to the disclosure has the above-described configuration and, therefore, can produce the hydroentangled nonwoven fabric of the disclosure.

(3.1) First Preparation Step

The method of producing a hydroentangled nonwoven fabric includes the first preparation step.

In the first preparation step, a spunbond web is prepared. A method of preparing the spunbond web is not particularly limited, and may be, for example, any known method of producing a spunbonded nonwoven fabric.

(3.2) Embossing Treatment Step

The method of producing a hydroentangled nonwoven fabric includes the embossing treatment step.

In the embossing treatment step, an embossing treatment is performed on the spunbond web to prepare a spunbonded nonwoven fabric precursor that contains heat-fused fibers and has plural embossed parts. This makes the resulting spunbonded nonwoven fabric precursor unlikely to fall apart even if, for example, the spunbonded nonwoven fabric precursor is gripped. Therefore, the spunbonded nonwoven fabric precursor has excellent ease of handling as compared to a case where the spunbonded nonwoven fabric precursor does not have any embossed part.

The embossing treatment refers to a treatment in which the spunbond web is sandwiched between an embossing roll and a flat roll, and some of the plural fibers contained in the spunbond web are thermally compression-bonded. The embossing roll has plural protruding parts arranged in a regular pattern on the surface. The embossing roll transfers the shape of the top surfaces of the plural protruding parts to some of the plural fibers contained in the spunbond web. As a result, the embossing roll forms plural embossed parts arranged in a regular pattern on the spunbond web. The shape of the top surfaces of the plural protruding parts arranged in a regular pattern on the embossing roll is the same as the shape exemplified above for the plural embossed parts arranged in a regular pattern. An area ratio of the plural protruding parts on the embossing roll (hereinafter, also referred to as "embossed area ratio") is preferably from 5% to 50%, more preferably from 5% to 18%. In the spunbonded nonwoven fabric precursor, the plural embossed parts are arranged in a regular pattern.

For the production of a hydroentangled nonwoven fabric satisfying the above-described condition (a), the surface temperature of the embossing roll (hereinafter, also referred to as "embossing temperature") is preferably from (resin melting point - 20°C) to (resin melting point + 20°C), more preferably from (resin melting point - 15°C) to (resin melting point + 10°C), still more preferably from (resin melting point - 15°C) to resin melting point. When the embossing temperature is from (resin melting point - 10°C) to the resin melting point, the plural fibers in the embossed parts are sufficiently melted. In other words, a spunbonded nonwoven fabric precursor having plural embossed parts that leave traces of the embossing treatment after the hydroentanglement step is obtained.

The embossing treatment for the production of a hydroentangled nonwoven fabric satisfying the condition (a) is hereinafter also referred to as "normal embossing treatment".

For the production of a hydroentangled nonwoven fabric satisfying the above-described condition (b), the embossing temperature may be any temperature that is lower than the resin melting point, and it is preferably (resin melting point - 20°C) or lower, more preferably (resin melting point - 30°C) or lower, still more preferably (resin melting point - 40°C) or lower, particularly preferably (resin melting point - 50°C) or lower. When the embossing temperature is lower than the resin melting point, the plural fibers in the embossed parts are not sufficiently melted. In other words, a spunbonded nonwoven fabric precursor having plural embossed parts that do not leave traces of the embossing treatment after the hydroentanglement step is obtained.

The embossing treatment for the production of a hydroentangled nonwoven fabric satisfying the condition (b) is hereinafter also referred to as "weak embossing treatment".

(3.3) Stretching Step

The method of producing a hydroentangled nonwoven fabric may further include the stretching step. The stretching step is performed before the layering step. The stretching step may be performed before the second preparation step, or may be performed after the second preparation step.

By performing the stretching step after the embossing treatment step, a spunbonded nonwoven fabric having excellent processing characteristics, which is unlikely to generate holes in the hydroentangled nonwoven fabric that is a final product, can be obtained. As the spunbonded nonwoven fabric, a stretchable spunbonded nonwoven fabric or an extensible spunbonded nonwoven fabric may be used and stretched.

As a stretching method, any conventionally known method may be employed, and one example thereof is a method of passing the web through two or more nip rolls. The stretching method may be a method of partially stretching the web, or a method of entirely stretching the web. The stretching method may be uniaxial stretching or biaxial stretching. As a method of stretching the web in the machine direction (MD), for example, the web is passed through two or more nip rolls. In this process, the spunbonded nonwoven fabric can be stretched by increasing the rotation speed of the nip rolls sequentially in the machine direction (MD).

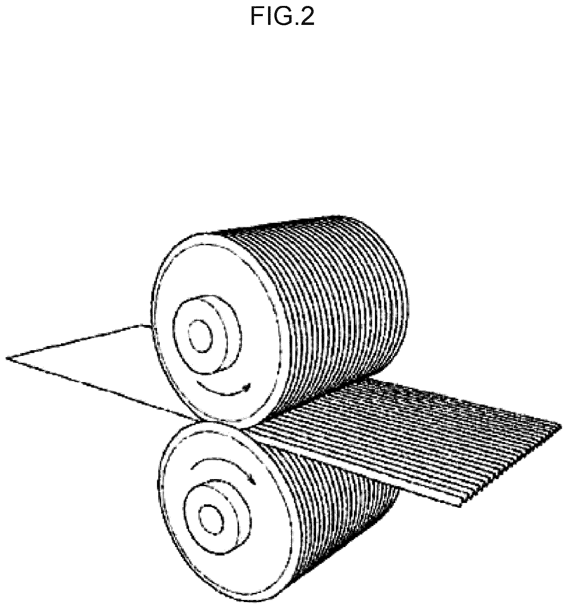

Another example of the stretching method is a gear stretching method. Any conventionally known method can be applied as the gear stretching method and, for example, the gear stretching device illustrated in FIG. 2 may be used. In the gear stretching device illustrated in FIG. 2, a spunbonded nonwoven fabric precursor is sandwiched between a pair of gear rolls and stretched.

The gear stretching method may be a method of entirely stretching the spunbonded nonwoven fabric precursor. The gear stretching method may be uniaxial stretching or biaxial stretching.

A draw ratio is preferably 50% or more, more preferably 100% or more, still more preferably 200% or more, but preferably 1,000% or less, more preferably 400% or less. In the case of uniaxial stretching, this preferred draw ratio applies to either the machine direction (MD) or the cross direction (CD), while in the case of biaxial stretching, at least one of the machine direction (MD) or the cross direction (CD) preferably satisfies the above-described draw ratio.

Particularly, the method of producing a hydroentangled nonwoven fabric preferably further includes gear stretching the spunbonded nonwoven fabric precursor (hereinafter, also referred to as "gear stretching step"). The gear stretching step is performed before the layering step. This enables to perform the stretching process without causing damage to the fiber web. In the hydroentangled nonwoven fabric produced by the production method of the disclosure, from the standpoint of the conformability to the skin and favorable liquid impregnation, it is preferred that the basis weight of the spunbonded nonwoven fabric is from 15 $g/m^2$ to 40 $g/m^2$, and that the ratio of the basis weight of the spunbonded nonwoven fabric with respect to the basis weight of the fiber web is from 0.35 to 1.60. It is more preferred that the hydroentangled nonwoven fabric further includes the above-described stretchable spunbonded nonwoven fabric or the above-described extensible spunbonded nonwoven fabric. It is particularly preferred that the hydroentangled nonwoven fabric includes the above-described stretchable spunbonded nonwoven fabric and the above-described extensible spunbonded nonwoven fabric.

A gear stretching method employed in the gear stretching step is the same as the above-exemplified gear stretching method.

(3.4) Second Preparation Step

The method of producing a hydroentangled nonwoven fabric includes the second preparation step.

In the second preparation step, a fiber web precursor is prepared. The fiber web precursor is composed of natural fibers or regenerated cellulose fibers. A method of preparing the fiber web precursor is not particularly limited, and any known fiber web production method may be employed. The fiber web precursor may be a commercially available product as well.

(3.5) Layering Step

The method of producing a hydroentangled nonwoven fabric includes the layering step.

In the layering step, the fiber web precursor is placed on at least one main surface of the spunbonded nonwoven fabric precursor to form a laminated body. As a method of placing the fiber web precursor on at least one main surface of the spunbonded nonwoven fabric precursor, any known method may be employed.

(3.6) Hydroentanglement Step

The method of producing a hydroentangled nonwoven fabric includes the hydroentanglement step.

In the hydroentanglement step, a hydroentangled nonwoven fabric is produced from the laminated body by hydroentangling. As a result, the plural fibers contained in the spunbonded nonwoven fabric precursor and the plural fibers contained in the fiber web precursor are entangled, and the spunbonded nonwoven fabric precursor and the fiber web precursor are integrated. Further, the hydroentangling causes the plural embossed parts arranged in a regular pattern on the spunbonded nonwoven fabric precursor to collapse, whereby a hydroentangled nonwoven fabric satisfying the above-described condition (a) or (b) is obtained.

The diameter of each nozzle generating a high-pressure water jet is not particularly limited, and it is preferably from 0.07 mm to 0.15 mm.

The distance between adjacent nozzles is also not particularly limited, and it is preferably from 0.5 mm to 1.5 mm.

The water pressure of the high-pressure water jet used in the hydroentangling is not particularly limited, and it is preferably from 0.1 MPa to 30 MPa, more preferably from 1.0 MPa to 7.0 MPa. When the water pressure of the high-pressure water jet is from 1.0 MPa to 30.0 MPa, a hydroentangled nonwoven fabric satisfying the above-described condition (a) or (b) is likely to be obtained. When the water pressure of the high-pressure water jet is from 1.0 MPa to 7.0 MPa, a hydroentangled nonwoven fabric satisfying the above-described condition (a) or (b) is more likely to be obtained. From the standpoint of the conformability to the skin as well as the standpoint of obtaining a lightweight feeling in wearing in addition to favorable liquid impregnation, in the hydroentangled nonwoven fabric produced by the production method of the disclosure, it is preferred that the basis weight of the spunbonded nonwoven fabric is from 15 $g/m^2$ to 40 $g/m^2$, and that the ratio of the basis weight of the spunbonded nonwoven fabric with respect to the basis weight of the fiber web is from 0.35 to 1.60. It is more preferred that the hydroentangled nonwoven fabric further includes the above-described stretchable spunbonded nonwoven fabric or the above-described extensible spunbonded nonwoven fabric, and it is particularly preferred that the hydroentangled nonwoven fabric includes the above-described stretchable spunbonded nonwoven fabric and the above-described extensible spunbonded nonwoven fabric.

When the hydroentangled nonwoven fabric has a three-layer structure, after the layering step and the hydroentanglement step are performed in this order, the layering step and the hydroentanglement step may be further performed in this order. Specifically, a fiber web precursor is placed on at least one main surface of the spunbonded nonwoven fabric precursor to form a first laminated body, and a hydroentangled nonwoven fabric having a two-layer structure is produced from the first laminated body by hydroentangling. Thereafter, another fiber web precursor may be placed on the other main surface of the spunbonded nonwoven fabric precursor included in the hydroentangled nonwoven fabric having a two-layer structure to form a second laminated body, and a hydroentangled nonwoven fabric having a three-layer structure may be produced from the second laminated body by hydroentangling.

EXAMPLES

The invention will now be described more concretely by way of Examples; however, the invention is not limited to the below-described Examples. Those materials, amounts of use, ratios, treatment procedures, and the like that are indicated in the below-described Examples can be modified as appropriate without departing from the spirit of the disclosure. It is noted here that, unless otherwise specified, "part(s)" means "part(s) by mass".

[1] Hydroentangled Nonwoven Fabric

[1.1] Example 1

A hydroentangled nonwoven fabric was produced in the following manner.

[1.1.1] First Preparation Step

[1.1.1.1] Preparation of Thermoplastic Polyurethane Elastomer

A polyester polyol having a number-average molecular weight of 1,932 in an amount of 71.7 parts by weight, 4.8 parts by weight of 1,4-butanediol, 0.3 parts by weight of pentaerythritol tetrakis[3-(3,5-di-*t*-butyl-4-hydroxyphenyl) propionate], and 0.3 parts by weight of a polycarbodiimide were mixed, and 22.9 parts by weight of MDI was added to the resulting mixture, which was subsequently thoroughly mixed with high-speed stirring and then allowed to react at 160°C for 1 hour. The thus obtained reaction product was pulverized, and 100 parts by mass of the resulting pulverized product was mixed with 0.2 parts by weight of ethylene-bis stearic acid amide, 0.5 parts by weight of triethylene glycol bis [3-(3,5-di-*t*-butyl-4-hydroxyphenyl)propionate], 0.4 parts by weight of ethylene-bis oleic acid amide, and 0.8 parts by weight of fine particles (average particle size: 2.0 μm), after which the resultant was melt-kneaded and granulated using an extruder (preset temperature: 210°C) to obtain a thermoplastic polyurethane elastomer (hereinafter, also referred to as "TPU (A-1)").

[1.1.1.2] Preparation of Thermoplastic Resin Composition

A thermoplastic resin composition (hereinafter, also referred to as "TP (B-1)") was prepared by mixing 94 parts by mass of a propylene homopolymer (hereinafter, also referred to as "PP-1") having an MFR (measured in accordance with ASTM D1238 at a temperature of 230°C and a load of 2.16 kg) of 60 g/10 min, a density of 0.91 $g/cm^3$, and a melting point of 160°C with 6 parts by mass of a high-density polyethylene (hereinafter, also referred to as "HDPE") having an MFR (measured in accordance with ASTM D1238 at a temperature of 190°C and a load of 2.16 kg) of 5 g/10 min, a density of 0.97 $g/cm^3$, and a melting point of 134°C.

[1.1.1.3] Method of Measuring Melting Point

The melting point is defined as the top of a peak that is observed on the lowest temperature side of a melting endothermic curve obtained using a differential scanning calorimeter (DSC) in which a sample is maintained in a nitrogen atmosphere at -100°C for 5 minutes and the temperature is subsequently raised at a rate of 10°C/min. Specifically, the melting point can be determined as the top of a peak that is observed on the lowest temperature side of a melting endothermic curve obtained with the use of a differential scanning calorimeter (DSC-7, manufactured by PerkinElmer Co., Ltd.) by maintaining 5 mg of a sample in a nitrogen atmosphere at -100°C for 5 minutes and subsequently raising the temperature at a rate of 10°C/min.

[1.1.1.4] Spun-laying Layering

TPU (A-1) and TP (B-1) were independently melted using a 75-mmφ extruder and a 50-mmφ extruder, respectively. Subsequently, using a spunbonded nonwoven fabric forming machine having a spinneret (length in the direction perpendicular to the machine direction (MD) on a screen: 800 mm), the thus melted TPU (A-1) and TP (B-1) were melt-spun under the conditions in which a resin temperature and a die temperature were both 205°C, a cooling air temperature was 20°C, and a stretching air flow rate was 3,200 m/min, whereby a spunbond web, which was composed of mixed long fibers containing long fibers A made of TPU (A-1) and long fibers B made of TP (B-1), was deposited on the screen.

The spinneret had a nozzle pattern in which TPU (A-1) discharge holes and TP (B-1) discharge holes were alternately arranged. The nozzle diameter of TPU (A-1) (fibers A) and that of TP (B-1) (fibers B) were 0.75 mmφ and 0.6 mmφ, respectively. The pitch of nozzles was 8 mm in the vertical direction and 11 mm in the cross direction. The ratio of the number of nozzles (nozzles for fibers A: nozzles for fibers B) was 1:1.45. The single-hole discharge amount of the fibers A and that of the fibers B were 0.78 g/(min-hole) and 0.59 g/(min-hole), respectively.

[1.1.2] Embossing Treatment Step

The spunbond web was peeled off from a moving belt, sandwiched between the below-described embossing roll and a flat roll (surface temperature: 97°C), and heat-treated to obtain a spunbonded nonwoven fabric precursor containing heat-fused fibers. The thus obtained spunbonded nonwoven fabric precursor had a basis weight of 28 g/m$^2$.

[1.1.2.1] Embossing Roll

Top surface shape of protruding parts: dot
Arrangement of plural protruding parts: regular pattern (equal intervals between adjacent protruding parts)
Embossed area ratio: 18%
Embossing temperature: 107°C

[1.1.2.2] Method of Measuring Basis Weight

From the spunbonded nonwoven fabric precursor, ten test pieces having a size of 300 mm in the machine direction (MD) and 250 mm in the cross direction (CD) were collected. These test pieces were collected at ten arbitrary spots of the spunbonded nonwoven fabric precursor. Subsequently, the mass (g) of each of the thus collected test pieces was measured using an electronic even balance (manufactured by Kensei Kogyo Co., Ltd.), and an average mass of the test pieces was calculated. The thus calculated average value was converted into the mass (g) per 1 m$^2$ and rounded off to the nearest whole number, and the resulting value was defined as the basis weight of the spunbonded nonwoven fabric precursor. The below-described measurement of basis weight was also performed in the same manner.

[1.1.3] Gear Stretching Step

The spunbonded nonwoven fabric precursor was inserted between a pair of gear rolls such that the roll rotation direction of the gear stretching device illustrated in FIG. 2 (i.e. gear processing machine) was aligned with the machine direction (MD) of the spunbonded nonwoven fabric precursor, and the spunbonded nonwoven fabric precursor was gear-stretched in the cross direction (CD). The pair of gear rolls mounted on the gear processing machine each had a diameter of 200 mm, the gear pitch was 2.5 mm, and the engagement depth of the pair of gear rolls was 3.5 mm.

[1.1.4] Measurement of Residual Strain

The residual strain of the thus gear-stretched spunbonded nonwoven fabric precursor after 100% elongation was measured. Specifically, five test pieces having a size of 200 mm in the machine direction (MD) and 50 mm in the cross direction (CD) were collected from the gear-stretched spunbonded nonwoven fabric precursor. These test pieces were stretched using a constant-speed elongation tensile tester at a chuck distance of 100 mm, a tensile speed of 100 mm/min, and a draw ratio of 100%, and then immediately allowed to recover to their original length at the same speed. Immediately thereafter, the test pieces were stretched at the same speed and a draw ratio of 100%, and then immediately allowed to recover to their original length at the same speed, after which the strain during the recovery was measured. An average value calculated for five nonwoven fabric laminated bodies was defined as the residual strain (unit: %) after 100% elongation.

The gear-stretched spunbonded nonwoven fabric precursor had a measured residual strain value of 50% or less after 100% elongation. In other words, the spunbonded nonwoven fabric precursor of Example 1 was found to be a stretchable spunbonded nonwoven fabric.

[1.1.5] Second Preparation Step

A rayon web precursor was prepared as a fiber web precursor. Specifically, rayon fibers having a fineness of 2 denier and a fiber length of 20 mm were used. This rayon nonwoven fabric precursor had a basis weight of 21 g/m$^2$.

[1.1.6] Layering Step

The rayon precursor was placed on both main surfaces of the spunbonded nonwoven fabric precursor to form a laminated body.

[1.1.7] Hydroentanglement Step

Using nozzles having a nozzle diameter of 0.1 mm and a nozzle gap of 1.0 mm, the laminated body was hydroentangled at a processing speed of 15 m/min with a pressure of 4 MPa in a first stage and 4 MPa in a second stage to obtain a hydroentangled nonwoven fabric having a three-layer structure. The thus obtained hydroentangled nonwoven fabric had a total basis weight of 70 g/m$^2$.

[1.2] Example 2

A hydroentangled nonwoven fabric was produced in the following manner.

[1.2.1] First Preparation Step

[1.2.1.1] Preparation of Thermoplastic Resin Composition

A thermoplastic resin composition (hereinafter, also referred to as "TP (B-2)") was prepared by mixing 73.7 parts by mass of "PP-1", 6.0 parts by mass of "HDPE", 20.0 parts by mass of a propylene random copolymer (copolymer of propylene and ethylene, r-PP) having an MFR (measured in accordance with ASTM D1238 at a temperature of 230°C and a load of 2.16 kg) of 60 g/10 min, a density of 0.91 g/cm$^3$, and a melting point of 142°C, and 0.3 parts by mass of erucic acid amide.

[1.2.1.2] Spun-laying Layering

A spunbond web was deposited on a screen by performing spun-laying layering in the same manner as in Example 1, except that: TP (B-2) was used in place of TPU (A-1) and TP (B-1); the resin temperature and the die temperature were both set at 220°C; and the stretching air flow rate was set at 5,233 m/min.

[1.2.2] Embossing Treatment Step

A spunbonded nonwoven fabric precursor was obtained by performing the embossing treatment step in the same manner as in Example 1, except that the embossing temperature was set at 116°C. The thus obtained spunbonded nonwoven fabric precursor had a basis weight of 18 g/m$^2$.

[1.2.3] Gear Stretching Step

The spunbonded nonwoven fabric precursor was gear-stretched by performing the gear stretching step in the same manner as in Example 1.

[1.2.4] Evaluation of Extensibility of Spunbonded Nonwoven Fabric Precursor

The maximum elongation of the thus gear-stretched spunbonded nonwoven fabric precursor was measured. Specifically, five 200 mm (MD) × 50 mm (CD) test pieces and five 50 mm (MD) × 200 mm (CD) test pieces were collected from the gear-stretched spunbonded nonwoven fabric precursor. These test pieces were collected at five arbitrary spots in both MD and CD (a total of 10 spots). Subsequently, a tensile test was conducted on each of the collected test pieces using a universal tensile tester (IM-201, manufactured by INTESCO Co., Ltd.) under the conditions of a chuck distance of 100 mm and a tensile speed of 100 mm/min to determine the elongation (maximum elongation [%]). An average value of the elongation determined for the above-described 10 spots (five spots in each of MD and CD) was defined as "maximum elongation".
The spunbonded nonwoven fabric precursor had a maximum elongation of 50% or more. In other words, the spunbonded nonwoven fabric precursor of Example 2 was found to be an extensible spunbonded nonwoven fabric.

[1.2.5] Second Preparation Step, Layering Step, and Hydroentanglement Step

A hydroentangled nonwoven fabric was obtained by performing the second preparation step, the layering step, and the hydroentanglement step in the same manner as in Example 1, except that the spunbonded nonwoven fabric precursor of Example 2 was used in place of the spunbonded nonwoven fabric precursor of Example 1. The thus obtained hydroentangled nonwoven fabric had a total basis weight of 60 g/m$^2$.

[1.3] Example 3

A hydroentangled nonwoven fabric was produced in the following manner.

[1.3.1] First Preparation Step

[1.3.1.1] Spun-laying Layering

A spunbond web was deposited on a screen by performing spun-laying layering in the same manner as in Example 1, except that: a propylene homopolymer having an MFR of 60 g/10 min was used in place of TPU (A-1) and TP (B-1); and the melting temperature and the die temperature were both set at 230°C.

[1.3.2] Embossing Treatment Step

A spunbonded nonwoven fabric precursor was obtained by performing the embossing treatment step in the same manner as in Example 1, except that the embossing temperature was set at 95°C. The thus obtained spunbonded nonwoven fabric precursor had a basis weight of 18 g/m$^2$. The spunbonded nonwoven fabric precursor had a basis weight of 13 g/m$^2$.

[1.3.3] Gear Stretching Step

The gear stretching step was not performed in Example 3.

[1.3.4] Evaluation of Stretchability and Extensibility of Spunbonded Nonwoven Fabric Precursor

The maximum elongation of the spunbonded nonwoven fabric precursor was measured in the same manner as in Example 2. The spunbonded nonwoven fabric precursor had a maximum elongation of less than 50%. In other words, the spunbonded nonwoven fabric precursor of Example 3 was found to be neither a stretchable spunbonded nonwoven fabric nor an extensible spunbonded nonwoven fabric.

[1.3.5] Second Preparation Step, Layering Step, and Hydroentanglement Step

A hydroentangled nonwoven fabric was obtained by performing the second preparation step, the layering step, and the hydroentanglement step in the same manner as in Example 1, except that the spunbonded nonwoven fabric precursor of Example 3 was used in place of the spunbonded nonwoven fabric precursor of Example 1. The rayon nonwoven fabric precursor had a basis weight of 23.5 g/m². The hydroentangled nonwoven fabric had a total basis weight of 60 g/m².

[1.4] Comparative Example 1

A hydroentangled nonwoven fabric was produced in the following manner.

[1.4.1] First Preparation Step

A spunbond web was prepared in the same manner as in Example 2.

[1.4.2] Embossing Treatment Step

A spunbonded nonwoven fabric precursor was obtained by performing the embossing treatment step in the same manner as in Example 2. The thus obtained spunbonded nonwoven fabric precursor had a basis weight of 15 g/m².

[1.4.3] Gear Stretching Step

The gear stretching step was not performed in Comparative Example 1.

[1.4.4] Evaluation of Extensibility of Spunbonded Nonwoven Fabric Precursor

The maximum elongation of the spunbonded nonwoven fabric precursor was measured in the same manner as in Example 2. The spunbonded nonwoven fabric precursor had a maximum elongation of 50% or more. In other words, the spunbonded nonwoven fabric precursor of Comparative Example 1 was found to be an extensible spunbonded nonwoven fabric.

[1.4.5] Second Preparation Step, Layering Step, and Hydroentanglement Step

A hydroentangled nonwoven fabric was obtained by performing the second preparation step, the layering step, and the hydroentanglement step in the same manner as in Example 1, except that the spunbonded nonwoven fabric precursor of Comparative Example 1 was used in place of the spunbonded nonwoven fabric precursor of Example 1. The rayon nonwoven fabric precursor had a basis weight of 22.5 g/m². The hydroentangled nonwoven fabric had a total basis weight of 60 g/m².

[1.5] Comparative Example 2

A hydroentangled nonwoven fabric was produced in the following manner.

[1.5.1] First Preparation Step

A spunbond web was prepared in the same manner as in Example 3.

[1.5.2] Embossing Treatment Step

A spunbonded nonwoven fabric precursor was obtained by performing the embossing treatment step in the same manner as in Example 2, except that the embossed area ratio was changed to 10% and the surface temperature of the embossing roll was changed to 150°C. The thus obtained spunbonded nonwoven fabric precursor had a basis weight of 13 g/m².

[1.5.3] Gear Stretching Step

The gear stretching step was not performed in Comparative Example 2.

[1.5.4] Evaluation of Stretchability and Extensibility of Spunbonded Nonwoven Fabric Precursor

The maximum elongation of the spunbonded nonwoven fabric precursor was measured in the same manner as in Example 2. The spunbonded nonwoven fabric precursor had a maximum elongation of less than 50%. In other words, the spunbonded nonwoven fabric precursor of Example 3 was found to be neither a stretchable spunbonded nonwoven fabric nor an extensible spunbonded nonwoven fabric.

[1.5.5] Second Preparation Step, Layering Step, and Hydroentanglement Step

A hydroentangled nonwoven fabric was obtained by performing the second preparation step, the layering step, and the hydroentanglement step in the same manner as in Example 1, except that the spunbonded nonwoven fabric precursor of Comparative Example 2 was used in place of the spunbonded nonwoven fabric precursor of Example 1. The rayon nonwoven fabric precursor had a basis weight of 23.5 g/m$^2$. The hydroentangled nonwoven fabric had a total basis weight of 60 g/m$^2$.

[1.6] Comparative Example 3

A hydroentangled nonwoven fabric was produced in the following manner.

[1.6.1] First Preparation Step

[1.6.1.1] Preparation of Thermoplastic Resin Composition

A thermoplastic resin composition (hereinafter, also referred to as "TP (B-3)") was prepared by mixing "PP-1" with a propylene-ethylene random copolymer having a melting point of 142°C, an MFR of 60 g/10 min, an ethylene unit content of 4.0% by mole, and a propylene unit content of 96.0% by mole, at a prescribed ratio.

[1.6.1.2] Spun-laying Layering

A spunbond web was deposited on a screen by performing spun-laying layering in the same manner as in Example 1, except that TP (B-3) was used in place of TPU (A-1) and TP (B-1). The fibers contained in the spunbond web were crimped composite fibers in which a core was made of the propylene homopolymer and a sheath was made of the propylene-ethylene random copolymer. The crimped composite fibers had a mass ratio [core/sheath] of 0.25.

[1.6.2] Embossing Treatment Step

A spunbonded nonwoven fabric precursor was obtained by performing the embossing treatment step in the same manner as in Comparative Example 2. The thus obtained spunbonded nonwoven fabric precursor had a basis weight of 17 g/m$^2$.

[1.6.3] Gear Stretching Step

The gear stretching step was not performed in Example 3.

[1.6.4] Evaluation of Stretchability and Extensibility of Spunbonded Nonwoven Fabric Precursor

The maximum elongation of the spunbonded nonwoven fabric precursor was measured in the same manner as in Example 2. The spunbonded nonwoven fabric precursor had a maximum elongation of less than 50%. In other words, the spunbonded nonwoven fabric precursor of Example 3 was found to be neither a stretchable spunbonded nonwoven fabric nor an extensible spunbonded nonwoven fabric.

[1.6.5] Second Preparation Step

Commercially available silk fibers (A1 SLIVER, average fiber diameter = 12 $\mu$m, manufactured by Hasegawa Corporation Co., Ltd.) were subjected to two mechanical crimping operations using a jig to obtain a bundle of crimped silk fibers (i.e. silk fibers that were crimped). The average fiber diameter of the silk fibers means an average value of the diameters of 30 silk fibers. The fiber diameter of each silk fiber was measured under a scanning electron microscope (SU3500 manufactured by Hitachi, Ltd.; at a magnification of $\times$300). As the jig in the mechanical crimping operations, a funnel-like jig including a tubular portion was used. Each mechanical crimping operation consisted of pushing the silk fibers into the tubular portion of the jig with the silk fibers being bent in a zigzag shape, and subsequently pushing the silk fibers out of the tubular portion in the form of a bundle.

Next, the bundle of the crimped silk fibers was cut to an average fiber length of 51 mm. The average fiber length of the crimped silk fibers means an average value of the lengths of 30 crimped silk fibers.

Using the thus cut bundle of the crimped silk fibers as a raw material, crimped silk fiber webs (specifically, crimped silk fiber nonwoven fabrics; the same applies below) were produced using a fiber opening machine and a roller-type parallel carding machine.

By the above-described operations, a first crimped silk fiber web having a basis weight of 13.5 g/m$^2$ and a second crimped silk fiber web having a basis weight of 13.5 g/m$^2$ were obtained. The basis weight was adjusted by changing the rotation speed of the roller-type parallel carding machine.

[1.6.6] Layering Step

The first crimped silk fiber web, the spunbonded nonwoven fabric precursor, and the second crimped silk fiber web were disposed on one another in this order to obtain a laminated body, and this laminated body was placed on a net. In this process, the machine direction (MD) of the first crimped silk fiber web and the machine direction (MD) of the second crimped silk fiber web were each oriented substantially parallel to the machine direction (MD) of the spunbonded nonwoven fabric precursor.

[1.6.7] Hydroentanglement Step

A hydroentanglement treatment was performed on the laminated body while allowing the net and the laminated body placed thereon to advance at a speed of 7 m/min.

The thus hydroentangled laminated body was sequentially subjected to a surface smoothing treatment using a nip roll, a drying treatment at 110°C using a hot air penetration-type heating machine, and another surface smoothing treatment using a nip roll in this order to obtain a hydroentangled nonwoven fabric.

The hydroentanglement treatment was performed by spraying the upper surface of the laminated body once with each of a columnar water jet having a water pressure of 2 MPa, a columnar water jet having a water pressure of 4 MPa, and a columnar water jet having a water pressure of 4 MPa, and subsequently spraying the lower surface of the laminated body once with a columnar water jet having a water pressure of 4 MPa, using a water-jet apparatus equipped with a nozzle having 0.10-mm orifices formed at 1-mm intervals. The distance between the respective surface of the laminated body and the orifices was set at 15 mm.

[2] Evaluation Methods

[2.1] Evaluation of Even Spacing of Embossed Parts

[2.1.1] Evaluation Method

Whether or not adjacent embossed parts or adjacent embossed pattern groups are repeated at equal intervals in a spunbonded nonwoven fabric included in a hydroentangled nonwoven fabric is checked as described below.

A fiber web (i.e. a rayon web or a crimped silk fiber web) is peeled off from the hydroentangled nonwoven fabric to remove the spunbonded nonwoven fabric constituting an intermediate layer.

The morphology of the thus removed spunbonded nonwoven fabric is observed (e.g., under a scanning electron microscope (SEM) or a light microscope, or by visual observation).

The distance between embossed parts that are adjacent to each other in the machine direction (MD) and the cross direction (CD), or the distance between adjacent embossed pattern groups, is measured at 10 spots, and an average value of the 10 measured values is calculated. This average value is compared with the measured values. FIG. 1 illustrates one example of the distance between adjacent embossed pattern groups. In FIG. 1, a symbol P represents a center point of a quilt pattern 94; a symbol LMD represents the length between the center points P of adjacent quilt patterns 94 in the machine direction (MD) (i.e. distance between adjacent embossed pattern groups); and a symbol LCD represents the length between the center points P of adjacent quilt patterns 94 in the cross direction (CD) (i.e. distance between adjacent embossed pattern groups).

When the distance cannot be measured at 10 spots, it is evaluated that the plural embossed parts are arranged in an irregular pattern (condition (a)), or that the spunbonded nonwoven fabric does not have an embossed part (condition (b)).

[2.1.2] Details

A 250 mm (MD) × 50 mm (CD) test piece was collected from the hydroentangled nonwoven fabric. Then, a duct tape was pasted to both main surfaces of the test piece in such a manner to cover the main surfaces of the test piece. Subsequently, the duct tape was manually pulled in the direction perpendicular to the main surfaces of the test piece to separate the fiber web from the hydroentangled nonwoven fabric and remove the spunbonded nonwoven fabric.

The morphology of the thus removed spunbonded nonwoven fabric was observed, and the distance between embossed parts that are adjacent to each other in the machine direction (MD) of the spunbonded nonwoven fabric, or the distance between adjacent embossed pattern groups, was measured at 10 spots. An average value of the 10 measured values (hereinafter, also referred to as "La") was calculated. The ratio (%) of difference between La and each of the 10 measured values, which is represented by the following Formula (Y1), was calculated. Formula (Y1): Ratio of difference (Y1) = [(Measured value - La)/La] × 100

When 5 or more of the 10 measured values have a ratio of difference (Y1) of within ±10%, it is evaluated that plural embossed parts are arranged regularly in the machine direction (MD) of the spunbonded nonwoven fabric.

For the cross direction (CD) of the spunbonded nonwoven fabric as well, the distance between embossed parts that are adjacent to each other in the cross direction (CD), or the distance between adjacent embossed pattern groups, was measured at 10 spots. An average value of the 10 measured values (hereinafter, also referred to as "Lb") was calculated. The ratio (%) of difference between Lb and each of the 10 measured values, which is represented by the following Formula (Y2), was calculated.

$$\text{Formula (Y2): Ratio of difference (Y2)} = [(\text{Measured value - Lb})/\text{Lb}] \times 100$$

When 5 or more of the 10 measured values have a ratio of difference (Y2) of within ±10%, it is evaluated that plural embossed parts are arranged regularly in the machine direction (MD) of the spunbonded nonwoven fabric.

When plural embossed parts are arranged regularly in both the machine direction (MD) and the cross direction (CD) of the spunbonded nonwoven fabric, it is deemed that the plural embossed parts are regularly arranged on the spunbonded nonwoven fabric. In a case where no embossed part is confirmed by morphological observation and the above-described measurement at 10 spots is thus not possible, it is evaluated that plural embossed parts are arranged in an irregular pattern, or that the spunbonded nonwoven fabric does not have an embossed part.

[2.2] Evaluation of Uniformity of Shapes of Plural Embossed Parts

[2.2.1] Evaluation Method

The uniformity of the shapes of plural embossed parts is evaluated as described below.

A fiber web (i.e. a rayon web or a crimped silk fiber web) is peeled off from a hydroentangled nonwoven fabric to remove a spunbonded nonwoven fabric constituting an intermediate layer.

The morphology of the thus removed spunbonded nonwoven fabric is observed (e.g., under an SEM or a light microscope).

Plural embossed parts or embossed parts constituting an embossed pattern group are extracted from 20 spots, and the area of each of the thus extracted 20 embossed parts is calculated, after which an average area of the 20 embossed parts is calculated. The area of each of the 20 embossed parts is compared with the average area.

When the area cannot be measured at 20 spots, it is evaluated that plural embossed parts do not have the same shape, or that the spunbonded nonwoven fabric does not have an embossed part.

[2.2.2] Details

A 250 mm (MD) × 50 mm (CD) test piece was collected from the hydroentangled nonwoven fabric. Then, a duct tape was pasted to both main surfaces of the test piece in such a manner to cover the main surfaces of the test piece. Subsequently, the duct tape was manually pulled in the direction perpendicular to the main surfaces of the test piece to separate the fiber web from the hydroentangled nonwoven fabric and remove the spunbonded nonwoven fabric.

The morphology of the thus removed spunbonded nonwoven fabric was observed, and the areas of 20 individual embossed parts, or the areas of 20 embossed parts constituting an embossed pattern group, were measured. An average value (S) of the 20 measured values was calculated. The ratio of difference (Y3) between S and each of the 20 measured values, which is represented by the following Formula (Y3), was calculated.

Formula (Y3): Ratio of difference (Y3) = [(Measured value - S)/S] × 100

When 10 or more of the 20 measured values have a ratio of difference (Y3) of within ±10%, it is evaluated that plural embossed parts have the same shape. In a case where no embossed part is confirmed and the above-described measurement at the above-described 10 spots is thus not possible, it is evaluated that plural embossed parts are arranged in an irregular pattern, or that the spunbonded nonwoven fabric does not have an embossed part.

[2.3] Measurement of CV Value

A CV value refers to a value that is obtained by dividing a standard deviation of the pitch distance between adjacent embossed parts randomly measured at 10 spots by an average value of the embossed pitch distance. A smaller CV value indicates a smaller variation in the pitch distance or a smaller average value of the embossed pitch distance.
An acceptable range of the CV value in the machine direction (MD) is 10% or more. An acceptable range of the CV value in the cross direction (CD) is also 10% or more.

[2.4] Average Coefficient of Friction (MIU) in Wet State

The surface smoothness was measured using "KES-FB4" manufactured by Kato Tech Co., Ltd. for a 10 cm × 10 cm piece of each sample that was placed on a test stand having a smooth metal surface. The surface roughness was measured by applying a load of 10 gf to the front surface (or back surface) of the sample, and pressing a 0.5 cm-wide contact terminal wrapped with a piano wire of a 0.5 mm in diameter against the sample. The surface friction was measured by arranging 20 pieces of the same piano wire as the contact terminal used for the measurement of the surface roughness in a width of 1.0 cm, and pressing the contact surface against the sample with a force of 50 gf using a weight. In the measurement of surface friction and the measurement of surface roughness, the sample was moved horizontally by 2 cm at a constant speed of 0.1 cm/sec, and a uniaxial tension of 10 g/cm was applied to the sample. From the measurement results, the MIU (average coefficient of friction) was determined.
The measurement results obtained for samples in a dry state were taken as dry-state results, while the measurement results obtained for samples impregnated with a simulated lotion (A) were taken as wet-state results. Components of the simulated lotion (A) consisted of 90% of water and 10% of glycerin.
An acceptable range of the average coefficient of friction (MIU) in a wet state is 0.60 or less.

[2.5] Bending Resistance in Wet State

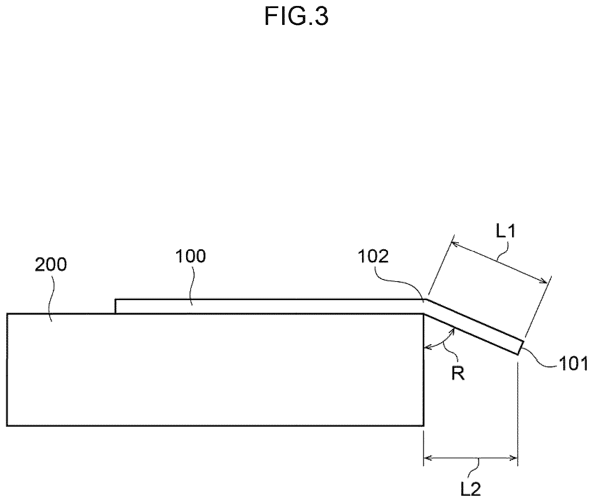

A method of measuring the bending resistance in a wet state will now be described referring to FIG. 3. In FIG. 3, a symbol 100 represents a test piece; a symbol 200 represents a platen; a symbol 101 represents a tip of the test piece; and a symbol 102 represents a contact part of the test piece with an edge of the platen.
The test piece 100 of 100 mm (CD) × 15 mm (MD) was collected from the hydroentangled nonwoven fabric. The test piece 100 was impregnated with the lotion (A). The test piece 100 impregnated with the lotion was placed on the platen 200 in a manner that the tip 101 of the test piece 100 protruded from the edge of the platen 200. A length L1 between the tip 101 and the contact part 102 of the test piece 100 was 15 mm. A horizontal distance L2 between the tip 101 of the bent test piece 100 and the platen 200 was measured. The bending angle R was calculated from the thus measured distance L2.
An acceptable range of the bending resistance in a wet state is 45° or less.

[2.6] Tensile Test

Five test pieces of 200 mm (CD) × 50 mm (MD) were collected from the hydroentangled nonwoven fabric. These test pieces were collected at five arbitrary spots of the hydroentangled nonwoven fabric. The test pieces were each stretched until broken using a universal tensile tester (210X, manufactured by INTESCO Co., Ltd.) under the conditions of a chuck distance of 100 mm and a tensile speed of 300 mm/min. The stretching direction of each test piece was parallel to the machine direction (MD) of the test piece.
The stress measured at 30% elongation of each test piece was defined as "30% stress", and the stress measured at breakage of each test piece was defined as "maximum stress". The elongation of each test piece is represented by the following Formula (Y).

Elongation (%) = [(Length of test piece after stretching - Length of test piece before stretching)/ Length of test piece before stretching] × 100          Formula (Y):

An acceptable range of the 30% stress is from 0.4 N/50 mm to 6.5 N/50 mm.

[Table 1]

| | | | Unit | Example 1 | Example 2 | Example 3 | Comparative Example 1 | Comparative Example 2 | Comparative Example 3 |
|---|---|---|---|---|---|---|---|---|---|
| Configuration | Outer layer | Type | - | rayon | rayon | rayon | rayon | rayon | silk |
| | Intermediate layer | Type | - | stretchable SB | extensible SB | SB | extensible SB | SB | SB |
| | | Embossing condition | - | normal | normal | weak embossing | normal | normal | normal |
| | | Stretching treatment | - | gear stretching | gear stretching | - | - | - | - |
| Basis weight | Outer layer | | g/m$^2$ | 21.0 | 21.0 | 22.0 | 22.5 | 23.5 | 13.5 |
| | Intermediate layer | | g/m$^2$ | 28.0 | 18.0 | 16.0 | 15.0 | 13.0 | 17.0 |
| | Total | | g/m$^2$ | 70.0 | 60.0 | 60.0 | 60.0 | 60.0 | 42.0 |
| | Ratio (intermediate layer/outer layer) | | - | 1.3 | 0.9 | 0.7 | 0.7 | 0.6 | 1.3 |
| Embossed part | Number of spots | Even spacing | MD | - | not measurable at 10 spots | 5 spots | not measurable at 10 spots | 10 spots | 10 spots | 10 spots |
| | | | CD | - | not measurable at 10 spots | 8 spots | not measurable at 10 spots | 10 spots | 10 spots | 10 spots |
| | | Shape uniformity | - | not measurable at 20 spots | 0 | not measurable at 20 spots | 13 | 13 | 12 |
| | Cv | Even spacing | MD | % | not measurable at 10 spots | 29.1 | not measurable at 10 spots | 5.3 | 2.4 | 4.2 |
| | | | CD | % | not measurable at 10 spots | 15.9 | not measurable at 10 spots | 2.8 | 1.5 | 3.2 |
| | | Shape uniformity | % | not measurable at 20 spots | 37.6 | not measurable at 20 spots | 8.4 | 12.6 | 18.4 |
| | Presence or absence of regular pattern | | - | absent | absent | absent | present | present | present |
| Surface smoothness | MIU in wet state | | - | 0.515 | 0.553 | 0.670 | 0.648 | 0.640 | 0.623 |

(continued)

| | | Unit | Example 1 | Example 2 | Example 3 | Comparative Example 1 | Comparative Example 2 | Comparative Example 3 |
|---|---|---|---|---|---|---|---|---|
| Bending property | Bending resistance in wet state | ° | 22.2 | 30.8 | 25.1 | 46.1 | 49.7 | 46.3 |
| Tensile test | Dry state | 30% stress | N/50 mm | 1.32 | 3.95 | 13.80 | 10.40 | 14.50 | 3.62 |
| | | Maximum strength | N/50 mm | 24.0 | 32.5 | 50.9 | 33.6 | 36.6 | 22.1 |
| | Wet state | 30% stress | N/50 mm | 0.48 | 1.50 | 5.87 | 7.12 | 10.70 | 3.54 |
| | | Maximum strength | N/50 mm | 17.1 | 24.7 | 34.9 | 25.4 | 31.4 | 23.7 |

In Table 1, "stretchable SB" represents a stretchable spunbonded nonwoven fabric; "extensible SB" represents an extensible spunbonded nonwoven fabric; "normal" of "embossing condition" represents an embossing temperature of from (resin melting point - 20°C) to (resin melting point + 20°C); and "weak embossing" of "embossing condition" represents an embossing temperature lower than the resin melting point.

In the hydroentangled nonwoven fabrics of Comparative Examples 1 to 3, plural embossed parts of the spunbonded nonwoven fabric were formed in a regular pattern. Therefore, in Comparative Examples 1 to 3, the bending resistance in a wet state was 46.1° or more, thus not 45° or less. As a result, it was found that the hydroentangled nonwoven fabrics of Comparative Examples 1 to 3 could not be made into a face mask having excellent conformability to the skin in a wet state.

In the hydroentangled nonwoven fabrics of Examples 1 and 2, plural embossed parts of the spunbonded nonwoven fabric were not formed in a regular pattern.

In the hydroentangled nonwoven fabric of Example 3, the spunbonded nonwoven fabric did not have an embossed part.

Therefore, in Examples 1 to 3, the bending resistance in a wet state was 30.8° or less, thus 45° or less. As a result, it was found that the hydroentangled nonwoven fabrics of Examples 1 to 3 could be made into a face mask having excellent conformability to the skin in a wet state.

The disclosure of Japanese Patent Application No. 2022-174978 filed on October 31, 2022 is hereby incorporated by reference in its entirety.

All the documents, patent applications, and technical standards that are described in the present specification are hereby incorporated by reference to the same extent as if each individual document, patent application, or technical standard is concretely and individually described to be incorporated by reference.

**Claims**

1. A hydroentangled nonwoven fabric, comprising:

   a spunbonded nonwoven fabric containing heat-fused fibers; and
   a fiber web bonded to at least one main surface of the spunbonded nonwoven fabric by hydroentangling, wherein:

   the fiber web is composed of natural fibers or regenerated cellulose fibers, and
   the hydroentangled nonwoven fabric satisfies the following (a) or (b):

   (a) the spunbonded nonwoven fabric has plural embossed parts in which some of the plural fibers contained in the spunbonded nonwoven fabric are fused, and the plural embossed parts are arranged in an irregular pattern; or
   (b) the spunbonded nonwoven fabric does not have the embossed parts.

2. The hydroentangled nonwoven fabric according to claim 1, wherein:

   the spunbonded nonwoven fabric has a basis weight of from 15 g/m$^2$ to 40 g/m$^2$, and
   a ratio of the basis weight of the spunbonded nonwoven fabric with respect to a basis weight of the fiber web is from 0.35 to 1.60.

3. The hydroentangled nonwoven fabric according to claim 1, wherein the fiber web is composed of rayon fibers.

4. The hydroentangled nonwoven fabric according to claim 1, wherein the plural fibers comprise extensible long fibers.

5. The hydroentangled nonwoven fabric according to claim 4, wherein the extensible long fibers comprise olefin resin long fibers.

6. The hydroentangled nonwoven fabric according to claim 1, wherein the plural fibers comprise stretchable long fibers.

7. The hydroentangled nonwoven fabric according to claim 6, wherein the stretchable long fibers comprise thermoplastic polyurethane-based elastomer long fibers.

8. The hydroentangled nonwoven fabric according to claim 1, wherein:

**EP 4 592 441 A1**

the fiber web is bonded to both main surfaces of the spunbonded nonwoven fabric by hydroentangling, and the fiber web is composed of the regenerated cellulose fibers.

9. A face mask, comprising the hydroentangled nonwoven fabric according to any one of claims 1 to 8.

10. A method of producing a hydroentangled nonwoven fabric, the method comprising:

preparing a spunbond web;
performing an embossing treatment on the spunbond web to prepare a spunbonded nonwoven fabric precursor that contains heat-fused fibers and has plural embossed parts;
preparing a fiber web precursor composed of natural fibers or regenerated cellulose fibers;
placing the fiber web precursor on at least one main surface of the spunbonded nonwoven fabric precursor to form a laminated body; and
producing a hydroentangled nonwoven fabric from the laminated body by hydroentangling.

11. The method of producing a hydroentangled nonwoven fabric according to claim 10, wherein:

the method further comprises gear stretching the spunbonded nonwoven fabric precursor, and
the gear stretching is performed before the formation of the laminated body.

12. The method of producing a hydroentangled nonwoven fabric according to claim 10 or 11, wherein a high-pressure water jet used in the hydroentangling has a water pressure of from 0.1 MPa to 30 MPa.

# FIG.1

FIG.2

# FIG.3

## INTERNATIONAL SEARCH REPORT

| | International application No. |
|---|---|
| | **PCT/JP2023/039339** |

### A. CLASSIFICATION OF SUBJECT MATTER

**D04H 5/03**(2012.01)i; **A45D 44/22**(2006.01)i; **D04H 3/16**(2006.01)i
FI: D04H5/03; A45D44/22 C; A45D44/22 D; D04H3/16

According to International Patent Classification (IPC) or to both national classification and IPC

### B. FIELDS SEARCHED

Minimum documentation searched (classification system followed by classification symbols)

D04H5/03; A45D44/22; D04H3/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-25764 A (NIPPON PAPER CRECIA CO., LTD.) 20 February 2020 (2020-02-20) | 10, 12 |
| | examples | |
| A | examples | 1-9, 11 |
| X | JP 2020-125568 A (UNITIKA LTD.) 20 August 2020 (2020-08-20) | 10, 12 |
| | examples | |
| A | examples | 1-9, 11 |
| X | JP 2010-281003 A (DAIWABO HOLDINGS CO., LTD.) 16 December 2010 (2010-12-16) | 10, 12 |
| | examples | |
| A | examples | 1-9, 11 |
| A | JP 2021-518783 A (HUVIS CORP.) 05 August 2021 (2021-08-05) | 1-12 |
| | entire text, all drawings | |
| A | WO 2020/158875 A1 (MITSUI CHEMICALS, INC.) 06 August 2020 (2020-08-06) | 1-12 |
| | entire text, all drawings | |

☑ Further documents are listed in the continuation of Box C.    ☑ See patent family annex.

| \* | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 December 2023** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2023/039339** |

### C. DOCUMENTS CONSIDERED TO BE RELEVANT

| Category* | Citation of document, with indication, where appropriate, of the relevant passages | Relevant to claim No. |
|---|---|---|
| A | WO 2022/009835 A1 (MITSUI CHEMICALS, INC.) 13 January 2022 (2022-01-13) entire text | 1-12 |
| X | JP 2021-098917 A (HAN, Jie) 01 July 2021 (2021-07-01) claim 1, manufacturing example 1 | 1 |
| A | claim 1, manufacturing example 1 | 2–12 |

Form PCT/ISA/210 (second sheet) (January 2015)

**INTERNATIONAL SEARCH REPORT**
**Information on patent family members**

International application No.

**PCT/JP2023/039339**

| Patent document cited in search report | | | Publication date (day/month/year) | Patent family member(s) | | | Publication date (day/month/year) |
|---|---|---|---|---|---|---|---|
| JP | 2020-25764 | A | 20 February 2020 | (Family: none) | | | |
| JP | 2020-125568 | A | 20 August 2020 | (Family: none) | | | |
| JP | 2010-281003 | A | 16 December 2010 | (Family: none) | | | |
| JP | 2021-518783 | A | 05 August 2021 | WO | 2019/231101 | A1 | |
| | | | | entire text, all drawings | | | |
| | | | | KR | 10-2019-0135332 | A | |
| | | | | CN | 111989011 | A | |
| WO | 2020/158875 | A1 | 06 August 2020 | US | 2022/0081814 | A1 | |
| | | | | entire text, all drawings | | | |
| | | | | EP | 3901346 | A1 | |
| | | | | KR | 10-2021-0096303 | A | |
| | | | | CN | 113474505 | A | |
| | | | | DK | 3901346 | T | |
| WO | 2022/009835 | A1 | 13 January 2022 | US | 2023/0220593 | A1 | |
| | | | | entire text | | | |
| | | | | EP | 4148175 | A1 | |
| | | | | KR | 10-2023-0003078 | A | |
| | | | | CN | 115702267 | A | |
| | | | | TW | 202202333 | A | |
| JP | 2021-098917 | A | 01 July 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018176522 A
- JP 2004244791 A
- DE 102019127827 A1
- JP 2022174978 A

**Non-patent literature cited in the description**

- Chemical Handbook: Applied Chemistry. Maruzen Publishing Co., Ltd., 1973, 1, 037-1, 038